# EUROPÄISCHE PATENTSCHRIFT

(11) **EP 3 942 341 B1**
(45) Veröffentlichungstag und Bekanntmachung des Hinweises auf die Patenterteilung: **03.05.2023**
(21) Anmeldenummer: 20713242.4
(22) Anmeldetag: 18.03.2020
(51) Int. Cl.: G02B 6/10, G02B 6/36, H04B 10/80, G02B 6/28, G02B 6/42

(54) **GEKRÜMMTE LICHTLEITERSTRUKTUR, VERFAHREN ZUM HERSTELLEN DERSELBEN UND OPTISCHES ÜBERTRAGUNGSSYSTEM**
CURVED LIGHT GUIDE STRUCTURE, METHOD FOR PRODUCING SAME, AND OPTICAL TRANSMISSION SYSTEM
STRUCTURE DE GUIDAGE DE LUMIÈRE INCURVÉE, PROCÉDÉ DE FABRICATION DE CELLE-CI ET SYSTÈME DE TRANSMISSION OPTIQUE

(30) Priorität: 22.03.2019 DE 102019203968; 19.06.2019 DE 102019208982
(43) Veröffentlichungstag der Anmeldung: 26.01.2022
(73) Patentinhaber: Fraunhofer-Gesellschaft zur Förderung der angewandten Forschung e.V., 80686 München (DE)
(72) Erfinder: SCHNEIDER, Tobias, 01109 Dresden (DE); KIRRBACH, René, 01109 Dresden (DE)
(74) Vertreter: Stöckeler, Ferdinand
(86) Internationale Anmeldenummer: PCT/EP2020/057445
(87) Internationale Veröffentlichungsnummer: WO 2020/193312

(56) Entgegenhaltungen:
- EP-A1- 3 276 387
- JP-A- S57 138 228
- US-A- 4 576 436
- US-A1- 2003 156 843
- US-A1- 2011 013 868
- US-A1- 2012 057 818

## Beschreibung

Die vorliegende Erfindung bezieht sich auf gekrümmte Lichtleiterstrukturen, auf Verfahren zum Herstellen derselben und auf ein optisches Übertragungssystem. Die vorliegende Erfindung bezieht sich ferner auf eine optische Vorrichtung zur Datenübertragung zwischen zwei sich um eine Rotationsachse bewegende Systeme.

Aktuelle industrielle Systeme basieren auf Datenübertragung mittels elektrischer Kabel. An den Rotationsstellen wird mit Schleifringen und Kontaktbürsten gearbeitet. Diese Systeme haben bauartbedingt eine begrenzte Lebensdauer durch den Verschleiß der Kontakte.

Durch die einseitige Signalausbreitung des elektrischen Signals auf dem Schleifring kommt es zur Mehrwegausbreitung. Das führt zu erheblichen Laufzeitunterschieden und einer Limitierung der Übertragungsbandbreite. Am Markt übliche Systeme ermöglichen Datenraten im Bereich von etwa 100 Mbit/s.

Die Druckschrift DE 10 2007 041 927 A1 beschäftigt sich ebenfalls mit dem Problem und will dieses durch eine Anpassung von Lichtwellenleitern, idealerweise Single Mode Fasern mit einem Kerndurchmesser von 10 µm lösen. Die dünnen Fasern werden dabei so angepasst, dass zusätzlich zur Ein-Auskopplung an der Stirnseite auch lateral Licht ein- oder ausgekoppelt werden kann. Dieser Ansatz basiert auf dem Wellencharakter des Lichts. In einer weiteren deutlich älteren Druckschrift DE 28 46 526 A1 wird eine prinzipielle Vorrichtung zur optischen Datenübertragung in einem Computertomographen beschrieben. In derart unkonkreten Lichtleiterstrukturen und Koppelstrukturen propagiert das Licht mehr oder weniger chaotisch durch den Lichtleiter. Dies limitiert die Datenrate in einem Bereich von 1 Mbit/s bis 30 Mbit/s, da dieser Ansatz auf klassischer Strahlenoptik basiert. Die Druckschrift EP 3 276 387 A1 beschreibt eine Lichtleiterstruktur nach dem Oberbegriff der Ansprüche 1 und 2.

Wünschenswert wäre eine Lichtleiterstruktur, die zum Übertragen optischer Signale zwischen zwei sich zueinander bewegenden Objekte eingerichtet ist und sowohl hohe Datenraten als auch lange Betriebsdauern ermöglicht.

Eine Aufgabe der vorliegenden Erfindung besteht deshalb darin, eine Lichtleiterstruktur, ein Verfahren zum Herstellen derselben und ein optisches System zu schaffen, die optische Signale mit hohen Datenraten und geringem Verschleiß übertragen können.

Diese Aufgabe wird durch den Gegenstand der unabhängigen Patentansprüche gelöst.

Ein Kerngedanke der vorliegenden Erfindung besteht darin, erkannt zu haben, dass durch Verwendung optischer Signale in Kombination mit einer Strahlformung ein geordneter Lichtausbreitungsweg erhalten werden kann, der zu geringen Interferenzen und somit hohen Übertragungsraten führt, wobei durch das optische Signal gleichzeitig ein verschleißarmer Betrieb möglich ist.

Gemäß einem Ausführungsbeispiel umfasst eine gekrümmte Lichtleiterstruktur, die zum Leiten eines optischen Signals in einem Spektralbereich eingerichtet ist, an zwei Enden der gekrümmten Lichtleiterstruktur angeordnete Endflächen und eine zwischen den Endflächen verlaufende erste Hauptseite und eine gegenüberliegend zu der ersten Hauptseite und sich zwischen den Endflächen erstreckende zweite Hauptseite. Die gekrümmte Lichtleiterstruktur umfasst zumindest einen ersten Durchlassbereich an der ersten Hauptseite, der ausgebildet ist, um ein optisches Signal in dem Spektralbereich zu empfangen und durchzulassen. Die gekrümmte Lichtleiterstruktur ist ausgebildet, um das optische Signal entlang einer axialen Richtung zwischen den Endflächen zu leiten, wobei die gekrümmte Lichtleiterstruktur zumindest einen zweiten Durchlassbereich an der zweiten Hauptseite aufweist, der ausgebildet ist, um zumindest einen Teil des optischen Signals aus der gekrümmten Lichtleiterstruktur durchzulassen, zu formen und auszusenden. Gemäß einer ersten Alternative ist erste Durchlassbereich ist ausgebildet, um das auszusendende optische Signal auf eine erste Endfläche der Endflächen zu richten, wobei dem zweiten Durchlassbereich ein Teilbereich der Endfläche zugeordnet ist; und der Teil des optischen Signals auf einem Anteil des optischen Signals basiert, der an dem Teilbereich umgelenkt wird. Der erste Durchlassbereich ist ausgebildet ist, um das empfangene optische Signal auf die erste Endfläche der Endflächen zu richten und dabei eine Fokussierung des optischen Signals auszuführen, so dass das von der ersten Endfläche umgelenkte optische Signal kollimiert ist. Gemäß einer zweiten Alternative ist der erste Durchlassbereich ausgebildet, um das empfangene optische Signal auf ein Reflexionselement zu lenken, das eingerichtet ist, um das optische Signal auf einen dem Reflexionselement zugeordneten Teilbereich einer ersten Endfläche der Endflächen zu reflektieren; und der zweite Durchlassbereich eingerichtet ist, um das von der Endfläche reflektierte optische Signal auszugeben. Der erste Durchlassbereich ist demgemäß ausgebildet, um das empfangene optische Signal auf das Reflexionselement zu lenken; wobei die Anordnung aus erstem Durchlassbereich und Reflexionselement eingerichtet ist, um das optische Signal kollimiert zu der ersten Endfläche zu senden.

Gemäß einem Ausführungsbeispiel umfasst ein optisches Übertragungssystem einen optischen Sender zum Senden eines optischen Signals, eine zum Empfangen des optischen Signals an dem ersten Durchlassbereich eingerichteten gekrümmten Lichtleiterstruktur und einen optischen Empfänger zum Empfangen zumindest eines Teils des optischen Signals an dem zweiten Durchlassbereich der gekrümmten Lichtleiterstruktur.

Gemäß einem Ausführungsbeispiel umfasst ein Verfahren zum Herstellen einer gekrümmten Lichtleiterstruktur ein Bereitstellen einer gekrümmten Lichtleiterstruktur mit an zwei Enden der gekrümmten Lichtleiterstruktur angeordneten Endflächen, einer zwischen den Endflächen verlaufenden ersten Hauptseite und einer gegenüberliegend zu der ersten Hauptseite und sich zwischen den Endflächen erstreckenden zweiten Hauptseite, die zum Leiten eines optischen Signals in dem Spektralbereich eingerichtet ist. Das Verfahren umfasst ein Anordnen zumindest eines ersten Durchlassbereichs an der ersten Hauptseite, so dass der erste Durchlassbereich ausgebildet ist, um ein optisches Signal in dem Spektralbereich zu empfangen und durchzulassen, so dass die gekrümmte Lichtleiterstruktur ausgebildet ist, um das optische Signal entlang einer axialen Richtung zwischen den Endflächen zu leiten. Das Verfahren umfasst ein Anordnen zumindest eines zweiten Durchlassbereichs an der zweiten Hauptseite, der ausgebildet ist, um zumindest einen Teil des optischen Signals aus der gekrümmten Lichtleiterstruktur durchzulassen, zu formen und auszusenden. Gemäß einer ersten Alternative wird das Verfahren ausgeführt, so dass der erste Durchlassbereich ausgebildet ist, um das auszusendende optische Signal auf eine erste Endfläche der Endflächen zu richten, wobei dem zweiten Durchlassbereich ein Teilbereich der Endfläche zugeordnet ist; und der Teil des optischen Signals auf einem Anteil des optischen Signals basiert, der an dem Teilbereich umgelenkt wird, so dass der erste Durchlassbereich ausgebildet ist, um das empfangene optische Signal auf die erste Endfläche der Endflächen zu richten und dabei eine Fokussierung des optischen Signals auszuführen, so dass das von der ersten Endfläche umgelenkte opti-4 sche Signal kollimiert ist. Gemäß einer zweiten Alternative wird das Verfahren ausgeführt, so dass der erste Durchlassbereich ausgebildet ist, um das empfangene optische Signal auf ein Reflexionselement zu lenken, das eingerichtet ist, um das optische Signal auf einen dem Reflexionselement zugeordneten Teilbereich einer ersten Endfläche der Endflächen zu reflektieren; und der zweite Durchlassbereich eingerichtet ist, um das von der Endfläche reflektierte optische Signal auszugeben, so dass der erste Durchlassbereich ausgebildet ist, um das empfangene optische Signal auf das Reflexionselement zu lenken; so dass die Anordnung aus erstem Durchlassbereich und Reflexionselement eingerichtet ist, um das optische Signal kollimiert zu der ersten Endfläche zu senden.

Weitere vorteilhafte Ausgestaltungen sind in den abhängigen Patentansprüchen definiert. Bevorzugte Ausführungsbeispiele der vorliegenden Erfindung werden nachfolgend Bezug nehmend auf die beiliegenden Zeichnungen erläutert. Es zeigen:
- Fig. 1a: eine schematische Aufsicht auf eine gekrümmte Lichtleiterstruktur gemäß einem Ausführungsbeispiel, das nicht unter den Wortlaut der Ansprüche fällt aber das Verständnis der Erfindung erleichtert.
- Fig. 1b: eine schematische Seitenschnittansicht der gekrümmten Lichtleiterstruktur aus Fig. 1a.
- Fig. 2a: eine schematische Seitenschnittansicht eines optischen Übertragungssystems gemäß einem Ausführungsbeispiel mit einer gekrümmten Lichtleiterstruktur gemäß einem Ausführungsbeispiel, die eine Mehrzahl von Reflexionselementen aufweist;
- Fig. 2b: eine schematische Aufsicht auf das optische System aus Fig. 2a;
- Fig. 3a: eine schematische Seitenschnittansicht eines optischen Übertragungssystems gemäß einem Ausführungsbeispiel, das eine gekrümmte Lichtleiterstruktur gemäß einem Ausführungsbeispiel aufweist wobei ein optische Empfänger ortsfest bezüglich der gekrümmten Lichtleiterstruktur angeordnet;
- Fig. 3b: eine schematische Aufsicht auf das optische Übertragungssystem aus Fig. 3a;
- Fig. 4: eine schematische Seitenschnittansicht eines optischen Übertragungssystems gemäß einem Ausführungsbeispiel, bei dem die gekrümmte Lichtleiterstruktur gemäß einem Ausführungsbeispiel so gebildet ist, dass benachbart zu einer Endfläche ein strahlteilendes Element angeordnet ist;
- Fig. 5: eine schematische Aufsicht auf ein optisches Übertragungssystem gemäß einem Ausführungsbeispiel, bei dem eine gekrümmte Lichtleiterstruktur gemäß einem Ausführungsbeispiel einen umlaufenden Winkel β um die Rotationsachse aufweist, der kleiner ist als 360°;
- Fig. 6: eine schematische Aufsicht auf ein optisches Übertragungssystem mit einer gekrümmten Lichtleiterstruktur gemäß einem Ausführungsbeispiel, wobei die gekrümmte Lichtleiterstruktur lediglich einen Teilbereich einer umlaufenden Bahn beschreibt;
- Fig. 7: eine schematische Aufsicht auf ein optisches Übertragungssystem gemäß einem Ausführungsbeispiel, das eine gekrümmte Lichtleiterstruktur gemäß einem Ausführungsbeispiel aufweist, die zumindest zwei Segmente aufweist;
- Fig. 8: eine schematische Aufsicht auf ein optisches Übertragungssystem gemäß einem Ausführungsbeispiel, das komplementär zu dem optischen Übertragungssystem aus Fig. 7 aufgebaut ist; und
- Fig. 9: eine schematische Seitenschnittansicht eines optischen Übertragungssystems gemäß einem Ausführungsbeispiel, das eine gekrümmte Lichtleiterstruktur mit einer gleichbleibenden Dicke gemäß einem Ausführungsbeispiel aufweist.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungsbeispiele beziehen sich auf ringförmige oder kreisförmige Strukturen und Bewegungsbahnen, wobei die Erfindung nicht hierauf beschränkt ist. Vielmehr können auch andere Krümmungen mit konstantem oder veränderlichem Krümmungsradius entlang eines axialen Verlaufs eines Lichtleiters, d. h., eines Leiters zum Leiten eines Spektralbereichs, d. h., eines optischen Wellenlängenbereichs eingesetzt werden. Darunter fallen beispielsweise ovale oder elliptische Bahnen, aber auch als Sonderform hiervon, kreisförmige Bahnen.

Manche der hierin beschriebenen Ausführungsbeispiele ermöglichen es, bei zueinander rotierenden Teilen eines Gesamtsystems eine zuverlässige Übertragung von Daten mit einem drahtlosen optischen Signal zu ermöglichen. Aufgrund der Rotation kann eine Aufteilung des Lichtsignals bzw. ein Abgriff des Lichtsignals auf einer Kreisbahn oder einem Teil hiervon eine zuverlässige Lösung bieten, die in Ausführungsbeispielen implementiert wird. Verwendete Lichtleiter ermöglichen, das ursprünglich kreisförmige Emissionsprofil des Emitters in ein Kreisring-förmiges Emissionsprofil zu übersetzen und hoch-homogene Ausleuchtung zu erzeugen ohne das sich der Emitter auf der Rotationsachse befindet.

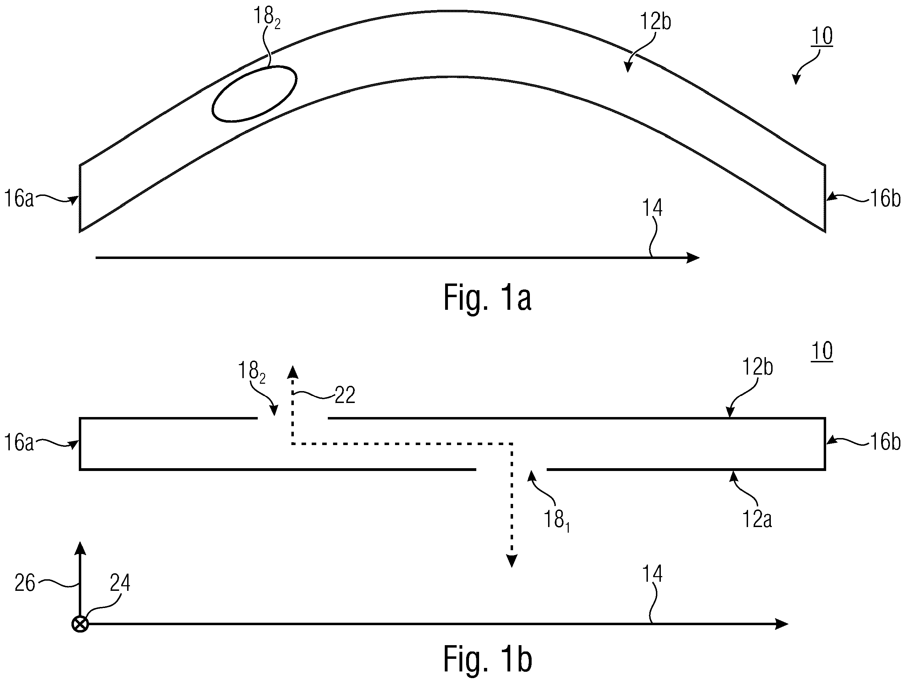

Fig. 1a zeigt eine schematische Aufsicht auf eine gekrümmte Lichtleiterstruktur 10 gemäß einem Ausführungsbeispiel, das nicht unter den Wortlaut der Ansprüche fällt aber das Verständnis der Erfindung erleichtert.

In der Aufsicht ist eine Hauptseite 12b zu sehen, die entlang einer axialen Erstreckungsrichtung 14 zwischen Endflächen 16a und 16b gekrümmt ist. Ein Krümmungsradius der Krümmung kann dabei konstant oder veränderlich sein. Der Krümmungsradius kann dabei beliebig ausgebildet sein und beispielsweise an eine spätere Bewegungsbahn zweier sich relativ zueinander bewegenden Objekte angepasst sein, so dass die Krümmung der gekrümmten Lichtleiterstruktur 10 an die Bewegung der Relativbewegung angepasst ist. Neben dem Krümmungsradius kann auch der axiale Verlauf an sich an die Bewegung angepasst sein.

Die Hauptseite 12b weist einen Durchlassbereich 18₂ auf, der eine Eintritt und/oder Austritt eines in Fig. 1b dargestellten optischen Signals 22 ermöglicht.

Fig. 1b zeigt eine schematische Seitenschnittansicht der gekrümmten Lichtleiterstruktur 10. In der dargestellten Seitenschnittansicht ist ein weiterer Durchlassbereich 18₁ gezeigt, der in einer Hauptseite 12a angeordnet ist, welche der Hauptseite 12b gegenüberliegend angeordnet ist. Beide Hauptseiten 12a und 12b verlaufen zwischen den Endflächen 16a und 16b. Die Hauptseiten 12a und 12b können beispielsweise gerade gebildet sein und über gerade oder gekrümmte Seitenflächen miteinander verbunden sein. Alternativ ist es ebenfalls möglich, dass die Hauptflächen 12a und/oder 12b entlang einer Richtung 24 senkrecht zu der Erstreckungsrichtung 14 gekrümmt sind. Eine derartige Krümmung kann zur Verkleinerung der Seitenflächen führen und kann im Extremfall dazu führen, dass die Hauptseiten 12a und 12b einander direkt berühren und/oder Teile, beispielsweise Hälften, einer kontinuierlich gekrümmten Struktur sind.

Die gekrümmte Lichtleiterstruktur 10 ist ausgebildet, um das optische Signal an einer der beiden Hauptseiten 12a oder 12b zu empfangen und an der anderen Hauptseite 12b bzw. 12a zumindest in Teilen wieder auszusenden. Ferner ist die gekrümmte Lichtleiterstruktur 10 ausgebildet, um das optische Signal 22 zwischen den Durchlassbereichen 18₁ und 18₂ entlang der axialen Richtung, d. h. der Erstreckungsrichtung 14, zu leiten. So kann das optische Signal 22 beispielsweise aus einer Richtung 26, die senkrecht zu der Richtung 14 und senkrecht zu der Richtung 24 im Raum angeordnet sein kann, an einem der Durchlassbereiche 18₁ oder 18₂ empfangen werden, innerhalb der gekrümmten Lichtleiterstruktur 10 in die axiale Richtung 14 umgelenkt werden und nach Zurücklegen eines Wegs entlang der axialen Erstreckungsrichtung 14 erneut umgelenkt werden, um die gekrümmte Lichtleiterstruktur 10 an dem anderen Durchlassbereich 18₂ bzw. 18₁ zumindest in Teilen wieder zu verlassen. Eine entsprechende Umlenkung kann dabei beispielsweise durch Brechung, Reflexion und/oder Totalreflexion erhalten werden.

Die gekrümmte Lichtleiterstruktur 10 kann für einen bestimmten Spektralbereich transparent gebildet sein oder zumindest eine geringe Dämpfung aufweisen. Hierzu kann die gekrümmte Lichtleiterstruktur 10 beispielsweise hohl gebildet sein. Alternativ kann die gekrümmte Lichtleiterstruktur 10 ein Material aufweisen, das in einem bestimmten Spektralbereich transparent ist. So können beispielsweise Glasmaterialien in einem für den Menschen sichtbaren Spektralbereich transparent sein, während andere Materialien, beispielsweise Silizium, in anderen Spektralbereichen transparent sein können. Ausführungsbeispiele sehen neben den genannten Materialien vor, Kunststoffe wie PMMA (Polymethylmethacrylat; Acryl) und Polycarbonat oder mineralische Gläser, etwa das unter N-BK7 bekannte Glas zu verwenden. Materialien gemäß Ausführungsbeispielen können bspw. im Bereich ultravioletter Wellenlängen, d. h., zwischen 100 nm und 380 nm, infraroter Wellenlängen, d. h., zwischen 780 nm und 1.000 µm, und/oder im Bereich dazwischenliegender sichtbarer Wellenlängen transparent sein.

Beim Aussenden des optischen Signals kann die gekrümmte Lichtleiterstruktur 10 bzw. der hierzu verwendete Durchlassbereich 18₁ oder 18₂ das optische Signal 22 formen. Eine Formung kann beispielsweise eine Strahlformung umfassen, beispielsweise eine Bündelung oder Streuung, kann aber auch eine Richtungsumlenkung und/oder eine Filterung umfassen.

Zur Umlenkung der Strahlen aus der Richtung 26 in die axiale Richtung 14 können beispielsweise entsprechend geneigte Endflächen 16a und/oder 16b verwendet werden.

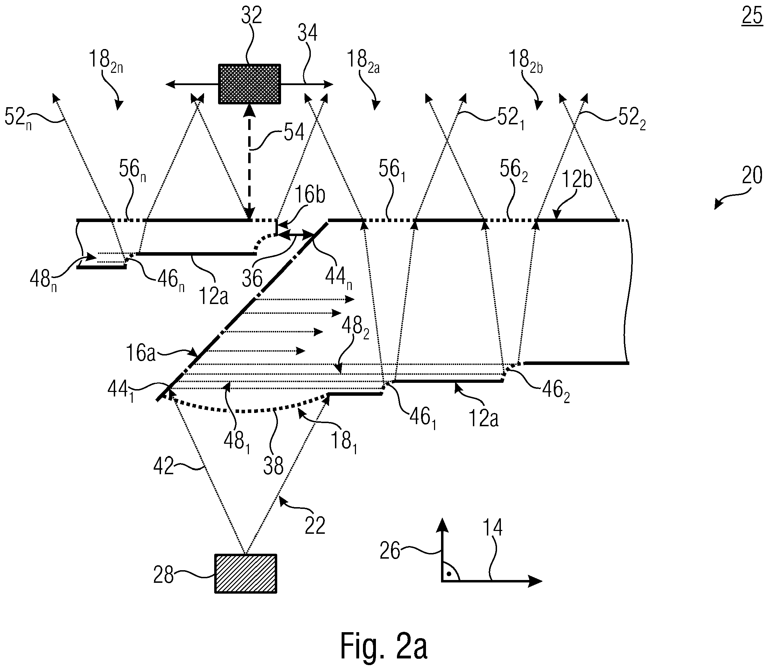

Fig. 2a zeigt eine schematische Seitenschnittansicht eines optischen Übertragungssystems 25 gemäß einem Ausführungsbeispiel mit einer gekrümmten Lichtleiterstruktur 20 gemäß einem Ausführungsbeispiel. Das optische Übertragungssystem 25 weist ferner einen optischen Sender 28 und einen optischen Empfänger 32 auf. Beispielhaft ist die gekrümmte Lichtleiterstruktur ortsfest bezüglich des optischen Senders 28 angeordnet, während der optische Empfänger 32 entlang einer Bewegungsbahn 34 relativ zu dem optischen Sender 28 und der gekrümmten Lichtleiterstruktur 20 beweglich angeordnet ist.

Die Seitenschnittansicht der Fig. 2a zeigt einen Ausschnitt der gekrümmten Lichtleiterstruktur 20 in einem Bereich, in dem die als ringförmige Struktur gebildete gekrümmte Lichtleiterstruktur 20 durchtrennt ist, so dass sich zwischen den Endflächen 16a und 16b ein Abstand 36 einstellt, der einen beliebigen Wert größer oder gleich null aufweisen kann, jedoch die zwei Endflächen 16a und 16b derart bereitstellt, dass eine Mehrfachumrundung der gekrümmten Lichtleiterstruktur 20 durch das optische Signal 22 verhindert ist. Obwohl eine Auftrennung der Flächen- und Ringstruktur ein einfaches Mittel ist, sehen alternative Ausführungsbeispiele vor, absorbierende oder reflektierende Flächen im Inneren einer durchgängigen, umlaufenden Struktur vorzusehen. Hierdurch kann eine saubere optische Trennung erhalten werden.

Der Durchlassbereich 18₁ kann ausgebildet sein, um das auszusendende optische Signal 22 auf die Endfläche 16a zu richten. Bspw. kann der Durchlassbereich 18₁ ausgebildet sein, um das optische Signal direkt auf die Endfläche 16a zu richten.

Die gekrümmte Lichtleiterstruktur 20 kann einen oder mehr, d. h., zumindest zwei, zumindest drei, zumindest vier, zumindest fünf, zumindest 10 oder mehr Durchlassbereiche oder 18₂ₐ, ..... 18₂ₙ aufweisen.

Das optische Signal 22 kann auf die Endfläche 16a gelenkt werden, die eingerichtet ist, um eine Umlenkung des optischen Signals 22 in die axiale Richtung 14 zu bewirken. Hierdurch kann erreicht werden, dass das optische Signal 22 entlang der beispielhaft als Höhenrichtung bezeichneten Richtung 26 aufgefächert wird. Anders ausgedrückt, wird das optische Signal 22 beispielsweise entlang der Endfläche 16a flächig verteilt und dort umgelenkt. Zur Verbesserung der optischen Eigenschaften kann der Durchlassbereich 18₁ eine Einrichtung zur Strahlenformung aufweisen, beispielsweise eine gekrümmte Oberfläche, um eine Linsenfunktion zu implementieren. So kann beispielsweise ein Ausgangsstrahl 42 zumindest teilweise kollimiert oder gebündelt werden und auf die Endfläche 16a gerichtet werden.

Jedem der zum Austritt des optischen Signals 22 eingerichteten Durchlassbereiche 18₂ₐ bis 18₂ₙ kann ein Teilbereich 44₁ bis 44ₙ zugeordnet sein, die disjunkt zueinander sein können, d. h., nicht überlappen. Ausführungsbeispiele sind jedoch nicht hierauf beschränkt sondern ermöglichen es auch überlappende Teilbereiche 44₁ bis 44ₙ zu implementieren, was eine einfache Ausgestaltung ermöglicht, da die Strahlengänge 48 auch etwas streuend, d. h., unvollständig kollimiert sein können. Derjenige Teil des optischen Signals 22, der mittels des Teilbereichs 44₁ bis 44ₙ umgelenkt wird, kann beispielsweise aus der axialen Richtung 14 unter Verwendung strahlumlenkender Elemente oder Reflexionselemente 46₁ bis 46ₙ umgelenkt werden, so dass jeweils ein Teil 48, bis 48ₙ des optischen Signals 22, d. h., ein Anteil des Strahlenbündels, in Richtung des jeweils zugeordneten Durchlassbereichs 18₂ₐ bis 18₂ₙ gelenkt wird.

Die Reflexionselemente 46₁ bis 46ₙ können beispielsweise spiegelnde Elemente sein, können aber auch eine Umlenkung durch eine Krümmung in der Oberfläche oder dergleichen aufweisen.

Gemäß einem bevorzugten Ausführungsbeispiel kann zumindest eines, mehrere oder beispielsweise jedes Reflexionselement 46₁ bis 46ₙ mit einer Materialverjüngung der gekrümmten Lichtleiterstruktur 20 entlang der Richtung 26 einhergehen, so dass beispielsweise Material entfernt oder entlang des radialen/axialen Verlaufs nicht weitergeführt wird, welches durch die erfolgte Auskopplung des in dieser Höhenebene geleiteten Teils 48 nicht mehr entlang der weiteren Richtung 14 zum Leiten der Strahlung benötigten wird.

Ausführungsbeispiele sehen vor, dass die Endfläche 16a derart gegenüber der Position des optischen Senders 28 bzw. der Richtung, aus der das optische Signal 22 empfangen wird, geneigt ist, so dass die Teile 44, bis 44ₙ des optischen Signals 22 parallel zu der Richtung 14 verlaufen, beispielsweise, parallel zu der Hauptseite 12b.

Zusätzlich zu einer Strahlformung in den Durchlassbereichen 18₂ₐ bis 18₂ₙ können die Reflexionselemente 46 ebenfalls eine Strahlformung bewirken, etwa eine Streuung des jeweiligen Teils 48ₙ.

Die Teile 48₁ bis 48ₙ können somit streuend gebildet sein und mit zunehmendem Abstand von der gekrümmten Lichtleiterstruktur 20 können durch Bereiche oder Kegel 52₁ bis 52ₙ zunehmen, bis sie sich überlappen. Der optische Empfänger 32 kann mit einem Abstand 54 zu der gekrümmten Lichtleiterstruktur 20 angeordnet sein, der beispielsweise so gewählt ist, dass sich dort die Bereiche 52₁ bis 52ₙ überlappen. Dies ermöglicht es, dass sich der optische Empfänger 32 stets in zumindest einem Bereich 52 befindet und somit stets das optische Signal 22 empfangen kann, da jeder Teil 44₁ bis 44ₙ denselben Informationsgehalt aufweist. Die Datenübertragung ist auch möglich, solange der Abstand zweier benachbarter Bereiche 52₁ bis 52ₙ kleiner ist als die räumliche Ausdehnung des Empfängerelements entlang der selben räumlichen Dimension. Es ist alternativ möglich, dass die optischen Signale kollimiert, d.h., mit parallelen Strahlen ausgegeben werden, so dass die Bereiche 52₁ bis 52, auch disjunkt zueinander sein können.

Die Durchlassbereiche 18₂ₐ bis 18₂ₙ können als Grenzfläche beispielsweise brechende Oberflächen 56₁ bis 56ₙ aufweisen, die beispielsweise basierend auf einer Krümmung, einer veränderlichen Form, einer Variation in der Brechungszahl oder dergleichen eine optische Formung bewirken können.

Fig. 2a zeigt somit eine gekrümmte Lichtleiterstruktur, die eine Mehrzahl von Reflexionselementen 46 aufweist, die an der Hauptseite 12a angeordnet sind und die ausgebildet sind, um einen Anteil 48 des optischen Signals 22, der von den jeweils zugeordneten Teilbereichen 44 der Endfläche 16a reflektiert wird, auf den zugeordneten Durchlassbereich 18₂ zu reflektieren.

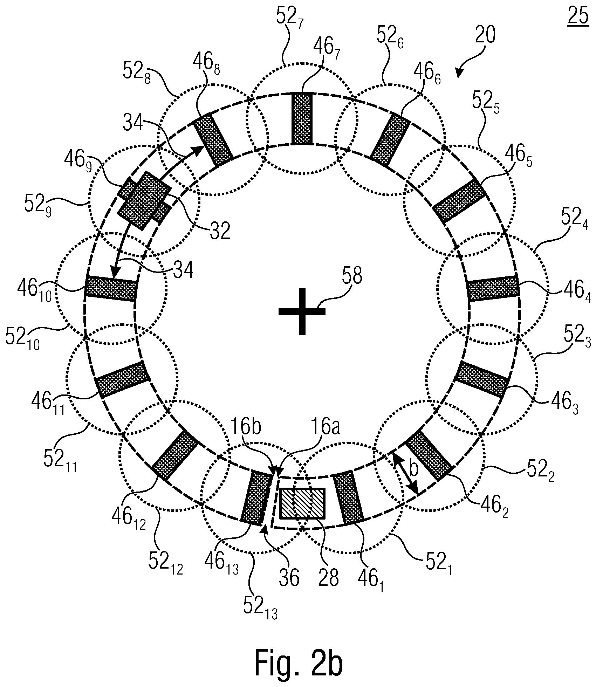

In anderen Worten zeigt die Fig. 2a einen beispielhaften Aufbau, bei dem ein optischer Datenlink bestehend aus einer Sendeeinheit 28 und einer Empfangseinheit 32 dargestellt ist. Der Datenlink kann eine Kommunikationswellenlänge, beispielsweise im infraroten, sichtbaren oder ultravioletten Spektralbereich nutzen. Dieser Spektralbereich kann vereinfacht als "Licht" oder "elektromagnetische Strahlung" bezeichnet werden. Die Sendeeinheit 28 und die Empfangseinheit 32 können neben, d. h. abseits, einer Rotationsachse angeordnet sein und sich beispielsweise auf einer Kreisbahn um die Rotationsachse bewegen. Eine dauerhafte Datenkommunikation wird dadurch ermöglicht, dass die Datenübertragung nicht nur zu den Zeiten möglich ist, in denen sich die Sendeeinrichtung 28 und die Empfangseinrichtung 32 direkt gegenüberstehen, sondern auch zu Zeiten, in denen dies nicht der Fall ist. Ausführungsbeispiele beschreiben eine Ringstruktur, welche es ermöglicht, die optische Verbindung zwischen Sender und Empfänger permanent zu ermöglichen. Dabei gibt es zwei Möglichkeiten, dies zu ermöglichen. Zum einen kann die Ringstruktur auf der Sendeeinheit angeordnet sein und der Empfänger bewegt sich auf einer Kreisbahn relativ hierzu entlang der Ringstruktur, wie es in Fig. 2a und Fig. 2b gezeigt ist.

Dabei wird der Ausgangsstrahl 42 von der ersten Ringoberfläche 38 fokussiert und auf die zweite Oberfläche/Endfläche 16a gelenkt. Die zweite Oberfläche 16a reflektiert den Strahl und lenkt ihn um beispielsweise 90° in den Ring 20 ab. Dabei kommt der Oberfläche 38 und der Endfläche 16a die Aufgabe zu, die Strahlen zu parallelisieren. Die gebrochenen und reflektierten Strahlen 48 können sich innerhalb der Rotationsebene bewegen, auf welcher die Rotationsachse senkrecht steht und dabei durch die Ringstruktur verlaufen. Die Ringstruktur 20 enthält Reflexionselemente 46, welche einen Teil der Strahlen 48 in Richtung der dritten, brechenden Oberfläche 56 lenken. Durch jedes Reflexionselement 46 wird die Höhe der Ringstruktur verringert und immer ein Teil der Leistung des Ausgangssignals 42 aus der Rotationsebene, in Richtung der gegengelagerten Empfangseinheit 32 gelenkt. Die dritte Oberfläche 56 hat die Aufgabe, den Ausgangsstrahl zu formen. Die Oberflächen 38, 16b, 46 und 56 können plan, sphärisch, asphärisch oder allgemein als Freiform gebildet sein. Auf diese Weise wird die Kreisbahn, auf der sich die Sendeeinheit und/oder die Empfangseinheit bewegt, homogen ausgeleuchtet und die optische Verbindung bleibt unabhängig von der Relativposition vom Sender 28 und Empfänger 32 zueinander bestehen. Durch die Parallelisierung der Strahlen 48 kann eine Mehrwegausbreitung vermieden werden und der daraus resultierende Signaljitter reduziert oder minimiert werden, was hohe Datenraten ermöglicht, beispielsweise im Bereich größer 10⁹ bit/s.

Durch die gezielte Lenkung der Strahlen werden die Oberflächen 12a und 12b so von den Strahlen 48 in geringem Maß oder gegebenenfalls nicht berührt oder getroffen bevor sie nicht von den Flächen 46, umgelenkt wurden. In einer Ebene des Empfängers 32 können Bereiche 52 von dem ausgekoppelten Anteil des optischen Signals abgedeckt werden, die sich in der Ebene des optischen Empfängers 32 überlappen können oder zumindest einen so geringen Abstand zueinander aufweisen, dass es zu keiner Unterbrechung der Kommunikation kommt oder nur zu solchen Unterbrechungen, die innerhalb der Auslegung des Kommunikationssystems sind. Die Struktur kann sich entlang einer Dickenrichtung 26 zwischen den Oberflächen 12a und 12b verjüngen.

Jeder der Durchlassbereiche 18₁ und 18₂ₐ bis 18₂ₙ kann bidirektional für den Spektralbereich des optischen Signals transparent sein. Die Durchlassbereiche können dabei gleiche oder voneinander verschiedene Spektralbereiche aufweisen. Die Oberflächen 38 und/oder 56 können zumindest als Teil eines Durchlassbereichs bezeichnet werden, die für das Licht durchlässig sind. Die Oberflächen 16a und/oder 46 können dahingegen reflektierend gebildet sein, wobei die Oberfläche 16a beispielsweise eine Ebene sein kann. Die Durchlassbereiche 18₂ₐ bis 18₂ₙ sind ausgebildet, um das empfangene optische Signal 22 auf die Endfläche 16a direkt oder indirekt zu richten und dabei eine Fokussierung des optischen Signals 22 auszuführen. Dies ermöglicht, dass das von der Endfläche 16a umgelenkte optische Signal 22 kollimiert ist.

Fig. 2b zeigt eine schematische Aufsicht auf das optische System 25 aus Fig. 2a. Die Ringstruktur 20 ist beispielsweise konzentrisch um eine Rotationsachse 58 angeordnet, um die sich der optische Empfänger 32 entlang der Bewegungsbahn 34 bezüglich des optischen Senders 28 bewegt.

Der Sender 28 und der Empfänger 32 sind relativ zueinander beweglich angeordnet, um eine relative Rotationsbewegung um die gemeinsame Rotationsachse 58 auszuführen.

Die gekrümmte Lichtleiterstruktur kann ausgebildet sein, um das optische Signal 22 über ein Reflexionselement 46 hin zu einer der Endflächen 16a zwischen der axialen Richtung 14 und einer schräg hierzu angeordneten Richtung umzulenken. Die gekrümmte Lichtleiterstruktur kann eine Mehrzahl von Durchlassbereichen 18₂ₐ bis 18₂ₙ in der Hauptseite 12b umfassen, wobei jedem Durchlassbereich 18₂ₐ bis 18₂ₙ ein Teilbereich 44 der Endfläche 16a zugeordnet sein kann.

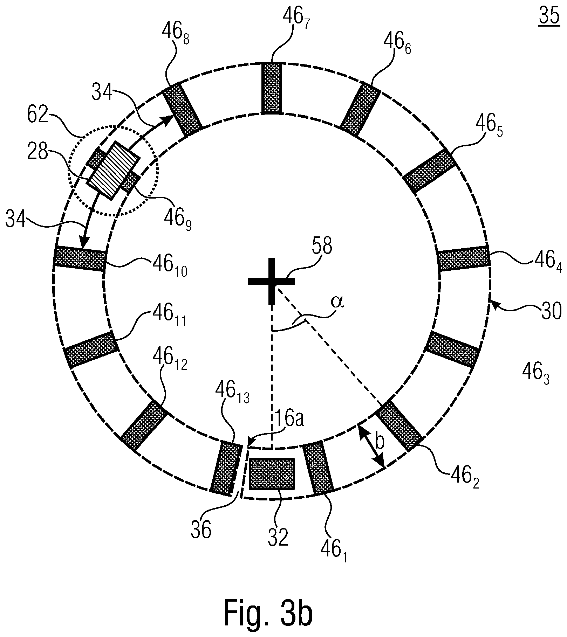

Eine Vielzahl von Durchlassbereichen 18₂ₐ bis 18₂ₙ kann an der Hauptseite 12b angeordnet sein. Diese Durchlassbereiche können ausgebildet sein, um jeweils einen Anteil des optischen Signals 22 auszugeben, wobei an einem Ort des optischen Empfängers 32 jeder der Durchlassbereiche 18₂ₐ bis 18₂ₙ den Teil des optischen Signals 22 in einem räumlichen Bereich 52 außerhalb der gekrümmten Lichtleiterstruktur bereitstellt. Die räumlichen Bereiche 52 können sich am Ort des optischen Empfängers 32 überlappen, so dass bei einer Relativbewegung des optischen Empfängers 32 gegenüber den Durchlassbereichen 18₂ₐ bis 18₂ₙ jeweils zumindest einer der Durchlassbereiche 18₂ₐ bis 18₂ₙ mit dem optischen Empfänger 32 zur optischen Kommunikation positioniert ist. Alternativ oder zusätzlich kann eine Vielzahl von Durchlassbereichen 18₂ₐ bis 18₂ₙ an der ersten Hauptseite angeordnet sein. Die Vielzahl von Durchlassbereichen können jeweils ausgebildet sein, um das optische Signal zu empfangen, wie es im Zusammenhang mit der Fig. 3b beschrieben ist. Der optische Sender kann so eingerichtet sein, dass an einem Ort der gekrümmten Lichtleiterstruktur das optische Signal 22 in einen räumlichen Bereich 62 auf die gekrümmte Lichtleiterstruktur trifft, wobei der räumliche Bereich entlang der Erstreckung der gekrümmten Lichtleiterstruktur größer ist als ein jeweiliger Durchlassbereiche 18₂ₐ bis 18₂ₙ. Die Durchlassbereiche 18₂ₐ bis 18₂ₙ können mit einem Abstand zueinander angeordnet sein, der so gewählt ist, dass bei einer Relativbewegung des optischen Senders 28 gegenüber den Durchlassbereichen 18₂ₐ bis 18₂ₙ jeweils zumindest einer der Durchlassbereiche 18₂ₐ bis 18₂ₙ mit dem optischen Sender 28 zur optischen Kommunikation positioniert ist.

In anderen Worten zeigt Fig. 2b die Ringstruktur als Sendeeinheit in einer Ansicht von oben. Die Reflexionselemente 46 sind über den ganzen Ring verteilt, um eine homogene Ausleuchtung zu ermöglichen. Die Stufenhöhe ist so gewählt, dass der Ring annähernd 360 Grad groß ist und mit der Endfläche 16a endet. Die entstehende Lücke 36 sollte möglichst klein sein, so dass eine komplette Abdeckung bestehen bleibt. Durch die Unterbrechung des Rings wird eine Mehrfachumrundung der Strahlen verhindert und Totalreflexion an der Oberfläche 16a ermöglicht.

Jeder der Durchlassbereiche 18₂ₐ bis 18₂ₙ ist dabei ausgebildet, um einen räumlichen Bereich 52 außerhalb der gekrümmten Lichtleiterstruktur zu beleuchten und an oder in diesem Bereich den jeweiligen Teil des optischen Signals bereitzustellen. Wie es in Fig. 2a gezeigt ist, kann der Durchlassbereich 18₁ benachbart zu der Endfläche 16a angeordnet sein, die beispielsweise einen Beginn oder Anfang der gekrümmten Strecke bereitstellen kann.

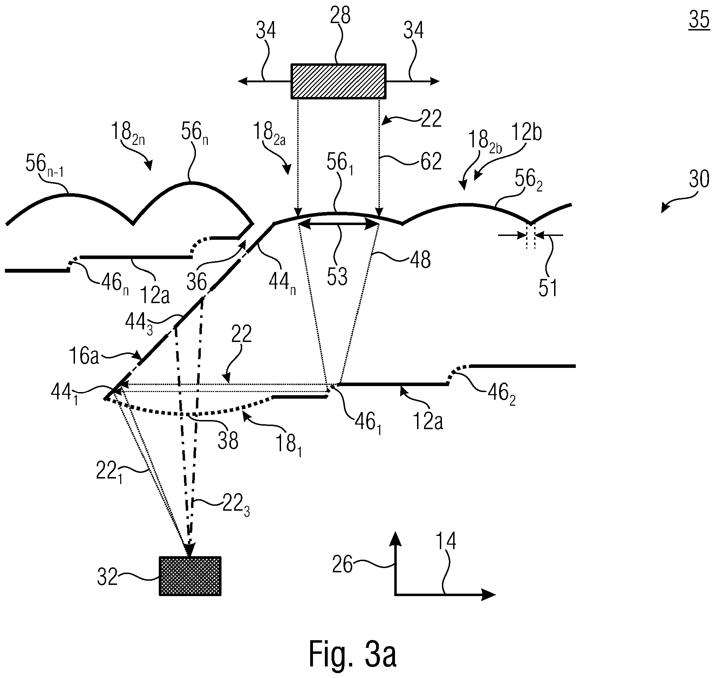

Fig. 3a zeigt eine schematische Seitenschnittansicht eines optischen Übertragungssystems 35 gemäß einem Ausführungsbeispiel, das eine gekrümmte Lichtleiterstruktur 30 gemäß einem Ausführungsbeispiel aufweist. Anders als im optischen Übertragungssystem 25 ist im optischen Übertragungssystem 35 beispielsweise der optische Empfänger 32 ortsfest bezüglich der gekrümmten Lichtleiterstruktur 30 angeordnet, während sich der optische Sender 28 entlang der Bewegungsbahn 34 relativ hierzu bewegt. Anders als bei einer in der Fig. 2a und der Fig. 2b gezeigten flächendeckenden Empfangsmöglichkeit kann ein Erfordernis an die gekrümmte Lichtleiterstruktur 30 vorwiegend so formuliert werden, dass in jeder Relativposition zwischen der gekrümmten Lichtleiterstruktur 30 und dem optischen Sender 28 eine adäquate Aufnahme bzw. ein adäquater Empfang des optischen Signals 22 mit der gekrümmten Lichtleiterstruktur 30 und eine entsprechende Übermittlung an den optischen Empfänger 32 ermöglicht wird. Das optische Signal 22 kann in einem Bereich 62 von dem optischen Sender 28 ausgesendet werden, der Bereich 62 ist bspw. ein Bereich, der von dem optischen Signal 22 senderseitig beleuchtet wird.

In anderen Worten können die Durchlassbereiche 18₂ₐ bis 18₂ₙ so angeordnet sein, dass ein Abstand zwischen den Durchlassbereichen 18₂ₐ bis 18₂ₙ so eingerichtet ist, dass der Abstand 51 höchstens der räumlichen Ausdehnung 53 des optischen Signals bzw. des Bereichs entspricht.

Der Aufbau der gekrümmten Lichtleiterstruktur 30 kann analog oder invers zu der gekrümmten Lichtleiterstruktur 20 sein. So können eine Mehrzahl oder Vielzahl brechender Oberflächen 56₁ bis 56ₙ an der Hauptseite 12b, die dem optischen Sender 28 zugewandt ist, angeordnet sein. Die brechenden Oberflächen 56₁ bis 56ₙ können direkt aneinander angrenzen, können aber auch mit einem geringen, optisch nicht-störendem Abstand 51 zueinander angeordnet sein. Die Brechung der brechenden Oberflächen 56₁ bis 56ₙ kann genutzt werden, um eine Fokussierung des optischen Signals 22 auf das jeweils bezüglich des optischen Senders 28 angeordnete Reflexionselement 46 zu bewirken, das dieselbe Umlenkung bewirken kann, die im Zusammenhang mit der Fig. 2a beschrieben wurde, nur in eine andere Richtung. Das optische Signal 22 oder zumindest ein Teil des optischen Signals 22 kann somit im Inneren der gekrümmten Lichtleiterstruktur 30 ebenfalls parallelisiert verlaufen, wobei "parallel" so zu verstehen ist, dass das optische Signal 22 parallel zu der Erstreckungsrichtung 14 und/oder der Rotationsebene verläuft, da die Hauptseite 12b gekrümmt ist und bezüglich der Parallelität zum optischen Signal 22 Abweichungen auftreten.

Abhängig durch welche der brechenden Oberflächen 56ᵢ, d. h., 56₁, ..., 56ₙ mit i=1,...,n das optische Signal 22 von der gekrümmten Lichtleiterstruktur 30 empfangen wird, wird das optische Signal 22 auf ein zugeordnetes Reflexionselemente 46ᵢ gelenkt, welches das optische Signal 22 umlenken kann und auf den zugeordneten Bereich 44ᵢ lenken kann.

Das bedeutet, das optische Signal 22 kann zu unterschiedlichen Zeitpunkten in unterschiedlichen Abschnitten/Höhen entlang der Richtung 26 durch die gekrümmte Lichtleiterstruktur 30 gelenkt werden. Dies ermöglicht, dass das optische Signal 22 zu unterschiedlichen Zeiten aus unterschiedlichen Richtungen durch die Einrichtung zur Strahlformung bzw. den Durchlassbereich 18₁ verläuft und auf den optischen Empfänger 32 trifft. Die gekrümmte Lichtleiterstruktur 25 ist bspw. so eingerichtet, dass die Durchlassbereiche 18₂ₐ bis 18₂ₙ ausgebildet sind, um das empfangene optische Signal 22 auf das jeweils zugeordnete Reflexionselement 46ᵢ zu lenken, das eingerichtet ist, um das optische Signal 22 auf einen dem Reflexionselement 46₁ zugeordneten Teilbereich 44ᵢ der Endfläche 16a zu reflektieren. Der Durchlassbereich 18₁ ist eingerichtet, um das von der Endfläche 16a reflektierte optische Signal auszugeben, unabhängig davon von welchem Teilbereich das optische Signal 22 abgelenkt wird.

Die Durchlassbereiche 18₂ₐ bis 18₂ₙ können einzeln oder jeweils ausgebildet sein, um das optische Signal 22 auf eines der Reflexionselemente 46 zu lenken. Die Anordnung aus dem Durchlassbereich 18₂ₐ bis 18₂ₙ und Reflexionselement 46 ist ausgebildet, um das optische Signal 22 kollimiert zu der Endfläche 16a zu senden.

Ähnlich zu der gekrümmten Lichtleiterstruktur 20 können die Reflexionselemente oder Reflexionselemente 46 bezogen auf einen Abstand zwischen den Hauptseiten 12a und 12b eine Verjüngung der gekrümmten Lichtleiterstruktur umsetzen. Die Reflexionselemente 46 können Kanten der jeweiligen Materialverjüngung umfassen oder bilden.

In anderen Worten besteht eine weitere Möglichkeit darin, die Ringstruktur bzw. gekrümmte Lichtleiterstruktur auf oder an der Empfangseinheit 32 anzuordnen, so dass sich die gegengelagerte Sendeeinheit 28 auf einer beispielhaften Kreisbahn entlang der Ringstruktur bewegen kann, wie es in Fig. 3a dargestellt ist. Der Ausgangsstrahl dieser Anordnung wird von der brechenden Oberfläche 56 auf das darunter befindliche Reflexionselement 46 fokussiert. Das Reflexionselement 46 lenkt den Strahl 48 in Richtung der Endfläche 16a und parallelisiert ihn. Die Endfläche 16a lenkt den Strahl, d. h., das optische Signal 22, in Richtung der angelagerten Empfangseinheit 32. Die Oberfläche 38 fokussiert den Strahl auf die Empfängereinheit 32.

Es ist anzumerken, dass Eigenschaften wie Parallelisieren, Kollimieren sowie ein paralleler Verlauf zu einer oder mehrerer Oberflächen nicht so zu verstehen ist, dass dies ohne jegliche Toleranz zu implementieren ist. Es ist vielmehr möglich, sowohl herstellungsbedingte als auch herstellungsvereinfachende Toleranzen vorzusehen, beispielsweise innerhalb eines Bereichs von ± 10%, ± 5% oder ± 2%. So kann beispielsweise die gekrümmte Lichtleiterstruktur 20 und/oder die gekrümmte Lichtleiterstruktur 30 so gebildet sein, dass Abweichungen von einem parallelen Verlauf der Strahlen zu der Erstreckungsrichtung 14 dadurch kompensiert werden, dass Abstände in den Bereichen 44 vorgesehen sind und/oder Abstände entlang der Höhenrichtung 26 zwischen den Reflexionselementen 46 vorgesehen sind oder die Krümmung der Fläche 38 ist so ausgelegt, dass sie eine Toleranz kompensieren kann.

Fig. 3b zeigt eine schematische Aufsicht auf das optische Übertragungssystem 35. Der Bereich 62 des optischen Senders 28 ist bevorzugt so eingerichtet, dass in jeder Rotationsposition des optischen Senders 28 um die Rotationsachse 58 der Bereich 62 mit einem der Durchgangsbereiche 18₂ₐ bis 18₂ₙ überlappt, das bedeutet, dass das optische Signal 22 stets auf eines der Reflexionselemente 46 gelenkt wird. Wie es im Zusammenhang mit dem optischen Übertragungssystem 25 beschrieben ist, sind auch kurze Unterbrechungen möglich, solange kein zu langer Kommunikationsabbruch entsteht. Es sind auch längere Unterbrechungen möglich, sollte ein derartig langer Kommunikationsabbruch vertretbar oder sogar gewünscht sein.

In anderen Worten zeigt Fig. 3b die Ringstruktur der Fig. 3a von oben. Die Reflexionselemente 46 sind wie bei der Ringstruktur als Sendeeinheit, siehe Fig. 2b, über den ganzen Ring verteilt. Sie lenken das einfallende Licht der gegengelagerten Sendeeinheiten 28 in Richtung der angelagerten Empfangseinheit 32. Je nach Position von Sendeeinheit 28 und Empfangseinheit 32 legt das Licht dabei eine Wegstrecke zwischen 0° und annähernd 360° eines Umlaufwinkels α durch das Ringelement zurück. Die Endfläche 16a der Ringstruktur lenkt in jedem Fall ein hohes Maß oder gar das komplette optische Signal 22 in Richtung der Empfängereinheit 32, so dass keine Mehrfachumrundung des optischen Signals 22 in der Ringstruktur 30 möglich ist.

Weiter ist es auch denkbar, dass eine einzelnen Ringstruktur gleichzeitig für beide Zwecke verwendet wird, das bedeutet, das optische Signal an unterschiedlichen Positionen aufzusammeln, um es einer Empfängereinheit zur Verfügung zu stellen oder um es an einer Position einzusammeln und es an mehreren Positionen der Empfangseinheit zur Verfügung zu stellen. Dabei wird bevorzugt gleichzeitig sowohl die angelagerte Sendeeinheit 28 als auch die angelagerte Empfängereinheit 32 mit dem Ringelement verbunden.

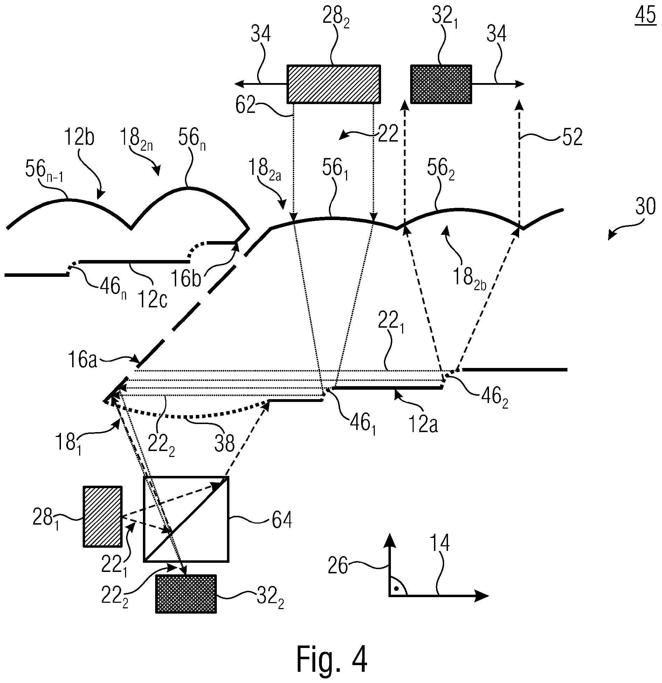

Dies kann durch ein Element zur Strahlteilung ermöglicht werden, wie es in Fig. 4 dargestellt ist.

Fig. 4 zeigt eine schematische Seitenschnittansicht eines optischen Übertragungssystems 45, bei dem beispielsweise die gekrümmte Lichtleiterstruktur 30 angeordnet ist. Verglichen mit dem optischen Übertragungssystem 45 ist benachbart zu der Endfläche 16a und dem Durchlassbereich 18₁ bezüglich der Einrichtung 38 zur Strahlformung ein strahlteilendes Element oder Strahlteiler 64 angeordnet, mit welchem optische Signale 22₁ und 22₂ miteinander kombiniert und/oder separiert werden können. Ein mittels eines optischen Senders 28, an den Strahlteiler 64 gesendetes und in Richtung des Durchlassbereichs 18₁ weitergeleitete optische Signal 22₁ kann an mehrere Durchlassbereiche, insbesondere alle Durchlassbereiche, die mit einem entsprechenden Reflexionselement 46 assoziiert sind, verteilt werden, wie es im Zusammenhang mit der Fig. 2a beschrieben ist, so dass unabhängig von der Position eines ersten optischen Empfängers 32₁ entlang der Bewegungsbahn 34 eine Übertragung zwischen Sender 28₁ und Empfänger 32₁ möglich ist. Gleichzeitig aber auch im zeitlichen Wechsel kann eine benachbart zu dem optischen Empfänger 32₁ und an der Hauptseite 12b angeordneter optischer Sender 28₂ ein Signal über einen an der zweiten Hauptseite 12b angeordneten Durchlassbereich hin zu einem Reflexionselement 46 senden, so dass eine Umlenkung an der Endfläche 16a erfolgt, so dass das optische Signal 22₂ in Richtung eines zweiten optischen Empfängers 32₂ an der Hauptseite 12a gelenkt wird.

An der Hauptseite 12b kann eine Mehrzahl von Durchlassbereichen 18₂ₐ bis 18₂ₙ angeordnet sein und an der Hauptseite 12a ist zumindest ein Durchlassbereich angeordnet. Das optische Übertragungssystem 45 umfasst zumindest zwei optische Sender 28₁ und 28₂ und zumindest zwei optische Empfänger 32₁ und 32₂. Der Strahlteiler 64 ist benachbart zu dem Durchlassbereich 18₁ angeordnet und ausgebildet, um ein aus dem Durchlassbereich 18₁ empfangenes optisches Signal 22₂ an dem benachbart zu dem Strahlteiler 64 angeordneten optischen Empfänger 32₂ zu leiten und, um ein von dem optischen Sender 28₁ empfangenes optisches Signal an dem Durchlassbereich 18₁ zu leiten. Benachbart zu der Hauptseite 12b sind der optische Sender 28₂ und der optische Empfänger 32₁ benachbart zu einem hiervon verschiedenen Durchlassbereich angeordnet.

In anderen Worten zeigt Fig. 4 die Ringstruktur bei gleichzeitiger Verwendung als Sende- und Empfangseinheit. Sowohl die gegengelagerte Sendeeinheit 28₂ als auch die gegengelagerte Empfangseinheit 32₁ können sich auf einer Kreisbahn entlang der Ringstruktur bewegen. Bei einzelner Verwendung der Ringstruktur als Sende- oder Empfangseinheit kann eine zweite Übertragungsstrecke mit einer eigenen Ringstruktur auf einer zweiten Kreisbahn zusätzlich angeordnet werden, um eine bidirektionale Übertragung zu ermöglichen. Andernfalls kann auch das Übertragungssystem 45 eingerichtet werden, um eine bidirektionale Übertragung zu ermöglichen. Fig. 4 zeigt somit eine gekrümmte Lichtleiterstruktur, bei der jedem Reflexionselement 46 ein Teilbereich der Endfläche 16a zugeordnet ist und jedem der Durchlassbereiche 18₂ₐ ein Reflexionselement 46 zugeordnet ist. Der Durchlassbereich 18₁ und/oder ein empfangener Durchlassbereich 18₂ kann benachbart zu der Endfläche 16a angeordnet werden.

Den vorangehend beschriebenen gekrümmten Lichtleiterstrukturen ist gemeinsam, dass das von dem Durchlassbereich empfangene optische Signal 22 bzw. 22₁ räumlich verteilt zwischen den Hauptseiten 12a und 12b und entlang der axialen Richtung 14 im Wesentlichen parallel zu dem Verlauf der Hauptseiten 12a und/oder 12b gelenkt werden. Die gekrümmte Lichtleiterstruktur kann eine Mehrzahl oder Vielzahl von entlang der Dickenrichtung 26 verteilten Reflexionselemente 46 aufweisen, die ausgebildet sind, um jeweils einen räumlichen Anteil des optischen Signals auszukoppeln.

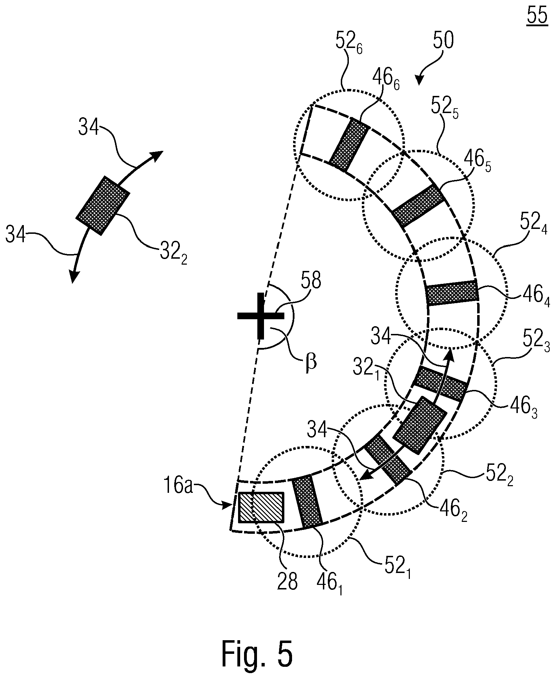

Fig. 5 zeigt eine schematische Aufsicht auf ein optisches Übertragungssystem 55 gemäß einem Ausführungsbeispiel, bei dem eine gekrümmte Lichtleiterstruktur 50 angeordnet ist. Verglichen mit der gekrümmten Lichtleiterstruktur 20 weist diese einen umlaufenden Winkel β um die Rotationsachse 58 auf, der kleiner ist als 360°, bevorzugt kleiner als 270° und möglicherweise kleiner als 180°. Wie andere hierin beschriebene gekrümmte Lichtleiterstrukturen kann die gekrümmte Lichtleiterstruktur 50 die Form eines Ellipsenringsegments beschreiben. Hierzu gehört als Sonderfall die Form eines Kreisringsegments. Ausführungsbeispiele beziehen sich auf gekrümmte Lichtleiterstrukturen, deren Krümmung bezogen auf eine umlaufend geschlossene Bahn einen Öffnungswinkel β von zumindest 5° und weniger als 360°, von zumindest 10° und weniger als 350° oder von zumindest 170° und weniger als 300° aufweisen.

Die lediglich teilweise Ausbildung der gekrümmten Lichtleiterstruktur 20 als gekrümmte Lichtleiterstruktur 50 führt nun dazu, dass ein sich bezüglich des optischen Senders 28 entlang der Bewegungsbahn 34 bewegender optischer Empfänger 32₁ zeitweise außerhalb der Bereiche 52, bis 52₆ ist. Um einen Kommunikationsabriss zu verhindern, kann beispielsweise ein zusätzlicher optischer Empfänger 32₂ angeordnet sein, der beispielsweise ortsfest bezüglich einer Relativposition zu dem optischen Empfänger 32₁ angeordnet ist. Sobald sich der optische Empfänger 32₁ außerhalb der Bereiche 52 befindet, kann alternativ hierzu der optische Empfänger 32₂ in einem Empfangsbereich sein, so dass zumindest einer der optischen Empfänger 32₁ und 32₂ das optische Signal empfangen kann. Dieses Ausführungsbeispiel lässt sich beliebig skalieren. So kann beispielsweise bei der Ausbildung der gekrümmten Lichtleiterstruktur in etwa als Viertel-Kreis eine Anzahl von vier optischen Empfängern einsetzen lassen, um ununterbrochen eine Datenübertragung zu ermöglichen. Andere Anzahlen von drei, fünf oder mehr optischen Empfängern sind ebenfalls möglich.

Das optische Übertragungssystem 50 kann so ausgebildet sein, dass der optische Sender 28 ortsfest mit der gekrümmten Lichtleiterstruktur 50 verbunden ist. Die gekrümmte Lichtleiterstruktur 50 kann einen Teilbereich einer umlaufenden Bahn beschreiben.

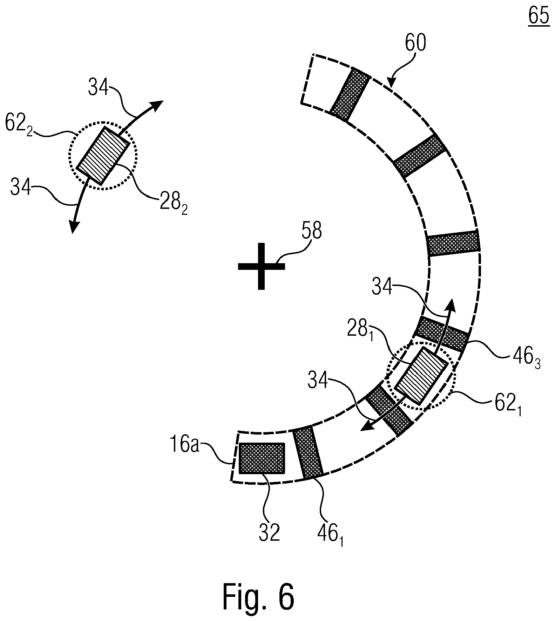

Fig. 6 zeigt eine schematische Aufsicht auf ein optisches Übertragungssystem 65 mit einer gekrümmten Lichtleiterstruktur 60 gemäß einem Ausführungsbeispiel, die ähnlich gebildet sein kann, wie die gekrümmte Lichtleiterstruktur 30, wobei die gekrümmte Lichtleiterstruktur 60 gegenüber der gekrümmten Lichtleiterstruktur 30 lediglich einen Teilbereich einer umlaufenden Bahn beschreibt, wie es für die gekrümmte Lichtleiterstruktur 50 beschrieben ist. Analog hierzu weist das optische Übertragungssystem 65 zwei oder mehr optische Empfänger 28₁ und 28₂ auf, die ortsfest bezüglich einander angeordnet sein können und sich entlang der Bewegungsbahn 34 bewegen können. So wie im optischen Übertragungssystem 55 zu jeder Relativposition aus Sender/Empfänger ein optischer Empfänger bezüglich der gekrümmten Lichtleiterstruktur angeordnet sein kann, so kann im optischen Übertragungssystem 65 in jeder Relativposition zumindest ein optischer Sender 28₁ oder 28₂ bezüglich der gekrümmten Lichtleiterstruktur 60 angeordnet sein, um das optische Signal an die gekrümmte Lichtleiterstruktur 60 zu senden.

In anderen Worten ist es in einem Ausführungsbeispiel möglich, die Ringstruktur auf ein Teilringelement zu reduzieren. In diesem Fall kann die gegenüberliegende Sende/Empfangseinheit mehrfach vorhanden sein und gleichmäßig über die Kreisbahn verteilt angeordnet sein, um die Verbindung aufrechtzuerhalten. Je mehr gegenüberliegende Sender/Empfangseinheiten möglich oder implementiert sind, desto kleiner kann die Winkelausdehnung des Ringelements gewählt werden. Um eine hohe Datenrate zu ermöglichen, können die gegenüberliegenden Sende/Empfangseinheiten auf elektrischem oder optischem Weg synchronisiert werden. Auf optischem Weg wird dazu beispielsweise ein optisches Verzögerungselement eingefügt. Auf elektrischem Weg kann sichergestellt werden, dass die Datenleitung für alle gegenüberliegenden Sende/Empfangseinheiten gleich lang sind oder Verzögerungsglieder eingefügt werden. Während Fig. 5 ein Teilringstück als Sendeeinheit in einer Ansicht von beispielsweise oben zeigt, bei der sich immer ein Empfänger über dem Teilringstück mit Sendeeinheit befindet, zeigt Fig. 6 ein Teilringstück als Empfangseinheit in einer Ansicht von beispielsweise oben, bei der sich immer ein Sender über dem Teilringstück mit Empfängereinheit befindet.

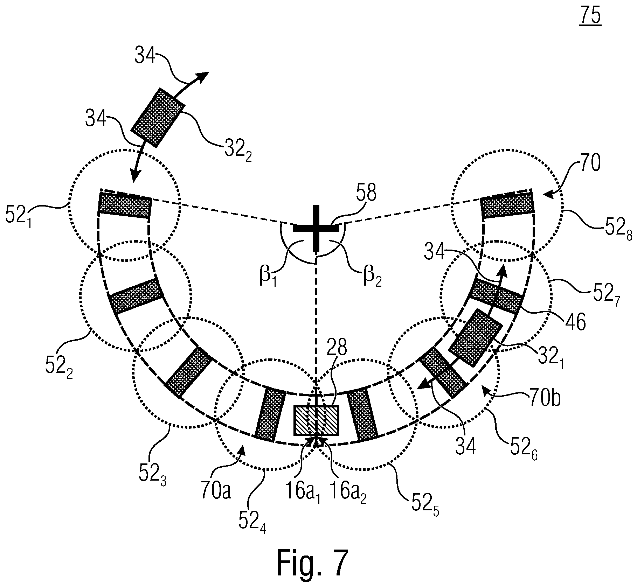

Fig. 7 zeigt eine schematische Aufsicht auf ein optisches Übertragungssystem 75 gemäß einem Ausführungsbeispiel, das eine gekrümmte Lichtleiterstruktur 70 aufweist, die zumindest ein Segment 70a und ein Segment 70b aufweist, die gemeinsam eine Gesamtstruktur, die gekrümmte Lichtleiterstruktur 70 bilden. Die Segmente 70a und 70b können gleich groß oder unterschiedlich groß im Hinblick auf den Öffnungswinkel ß1 und β2 sein, die die Segmente bezüglich der Rotationsachse 58 beschreiben. Jedes der Segmente weist eine geneigte Endfläche 16a₁ und 16a₂ auf, so dass das von dem optischen Sender 28 empfangene optische Signal in unterschiedliche Richtungen und in jedem der optisch voneinander getrennten Segmente 70a und 70b geleitet wird. Die Endflächen 16a₁ und 16a₂ können benachbart zueinander in einem Mittenbereich der gekrümmten Lichtleiterstruktur 70 angeordnet sein. Für den Eintritt des optischen Signals in die gekrümmte Lichtleiterstruktur eingerichtete Durchlassbereiche können ebenfalls jeweils in dem Mittenbereich und benachbart zu den Endflächen 16a₁ und 16a₂ eingerichtet sein, wie es beispielsweise im Zusammenhang mit der Fig. 2a beschrieben ist.

In anderen Worten zeigt Fig. 7 ein symmetrisches Teilringstück als Sendeeinheit. Es ist eine Ansicht von beispielsweise oben dargestellt. Immer ein Empfänger befindet sich über dem Teilringstück mit Sendeeinheit.

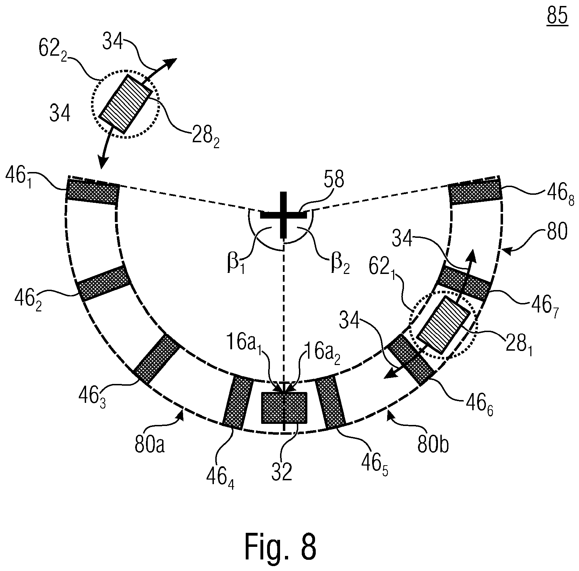

Fig. 8 zeigt eine schematische Aufsicht auf ein optisches Übertragungssystem 85 gemäß einem Ausführungsbeispiel, das eine gekrümmte Lichtleiterstruktur 80 gemäß einem Ausführungsbeispiel aufweist. Das optische Übertragungssystem 85 ist dabei komplementär aufgebaut zu dem optischen Übertragungssystem 75. Das bedeutet, es weist zwei Segmente 80a und 80b auf, die beispielsweise symmetrisch bezüglich eines Mittenbereichs angeordnet sind, in welchem die geneigten Endflächen 16a₁ und 16a₂ angeordnet sind und die ausgelegt sind, um empfangene optische Signale an den optischen Empfänger 32 zu richten.

Die Segmente 80a und 80b können ebenso wie die Segmente 70a und 70b beispielsweise einen Öffnungswinkel von in etwa 90° aufweisen. Es sind kleinere und/oder größere Winkel möglich. Auch können die Segmente so groß gebildet sein, dass sie jeweils nahezu 180° oder gar exakt 180° oder mehr aufweisen, was die Anordnung eines jeweils zweiten oder sonstig mehrfachen Senders und/oder Empfängers redundant und/oder optional machen kann, um gleichzeitig eine durchgängige Kommunikation bereitzustellen.

In anderen Worten kann in einem weiteren Ausführungsbeispiel das Ringelement auch symmetrisch aufgebaut sein, so dass das Sende- oder Empfangssignal jeweils von der zweiten Oberfläche 16a₁ bzw. 16a₂ in einen rechten und linken Flügel geteilt wird, wobei rechts und links ebenso wie oben und unten sowie vorne und hinten rein der Veranschaulichung dienen und nicht einschränkend wirken. Dabei kann die Ringstruktur sowohl als Vollring- als auch als Teilringstücke gebildet sein. Die Figuren 7 und 8 zeigen jeweils die Ausführung als Teilringstück. Beispielsweise kann die reflektierende oder spiegelnde Endfläche 16a₁ und 16a₂ in der Mitte angeordnet sein und/oder doppelt, d. h., für jeden Flügel oder jedes Segment ausgeführt sein, um eine Reflexion in beide Richtungen zu ermöglichen. Während Fig. 7 ein symmetrisches Teilringstück als Sendeeinheit in einer Ansicht von oben zeigt, bei der immer ein Empfänger über dem Teilringstück mit Sendeeinheit angeordnet ist, zeigt Fig. 8 ein symmetrisches Teilringstück als Empfangseinheit 32 in einer Ansicht von oben, bei der immer ein Sender über dem Teilringstück mit Empfängereinheit 32 angeordnet ist.

Anders als in Fig. 7, wo der optische Sender ortsfest in dem Mittenbereich angeordnet ist, kann der optische Empfänger 32 im optischen Übertragungssystem 85 ortsfest in dem Mittenbereich angeordnet sein.

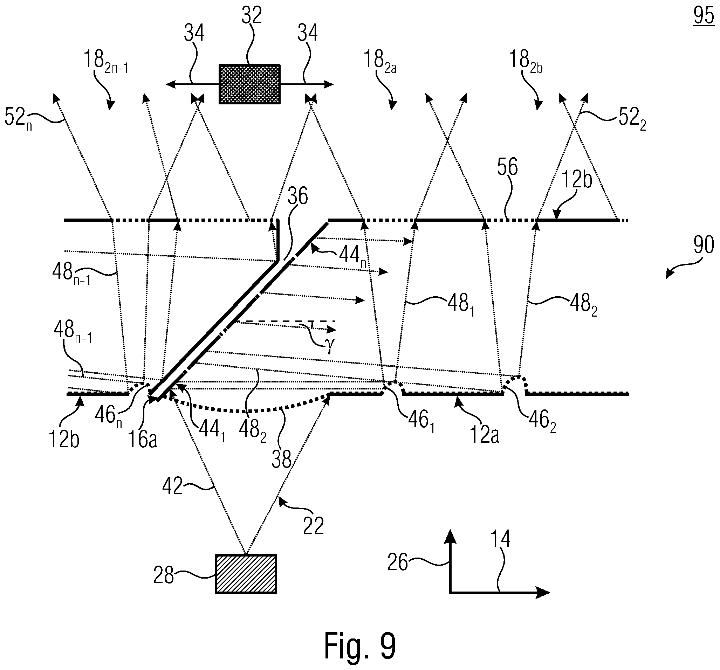

Fig. 9 zeigt eine schematische Seitenschnittansicht eines optischen Übertragungssystems 95 gemäß einem Ausführungsbeispiel, das eine gekrümmte Lichtleiterstruktur 90 gemäß einem Ausführungsbeispiel aufweist. Die gekrümmte Lichtleiterstruktur 90 kann ähnlich gebildet sein, wie die gekrümmte Lichtleiterstruktur 20, zumindest im Hinblick auf die Funktionsweise bezüglich des optischen Senders 28 und des optischen Empfängers 32, so dass diesbezüglich auch das optische Übertragungssystem 95 mit dem optischen Übertragungssystem 25 übereinstimmt.

Die gekrümmte Lichtleiterstruktur 95 unterscheidet sich im Hinblick auf die interne Reflexion des optischen Signals 22, um das optische Signal 22 an den optischen Empfänger 32 zu leiten. Während die Umlenkung an der Endfläche 16a im optischen Übertragungssystem 25 so eingerichtet ist, dass das optische Signal 22 nach der Reflexion im Wesentlichen parallel zu der axialen Erstreckungsrichtung 14 angeordnet ist, ist die Endfläche 16a in der gekrümmten Lichtleiterstruktur 90 so eingerichtet, dass das optische Signal bewusst in einem Winkel γ bezüglich der axialen Erstreckungsrichtung 14 geneigt ist, so dass das optische Signal in Richtung der Hauptseite 12a zurückgeworfen wird. Die Endfläche 16a ist somit eingerichtet, um das optische Signal 22 in eine Richtung, die geneigt zum Verlauf der Hauptseite 12b ist, in eine Richtung hin zu der Hauptseite 12a umzulenken. Hierdurch werden die Reflexionselemente 46₁ bis 46ₙ ebenfalls von den Anteilen 48₁ bis 48, beleuchtet oder getroffen. Die Reflexionselemente sind so eingerichtet, den jeweiligen Teil, der unverändert einem Teilbereich der Endfläche 16a zugeordnet ist, umzulenken und/oder zu reflektieren.

Die Mehrzahl von Reflexionselementen 46 ist mit zunehmendem Abstand von der Endfläche 16a angeordnet und unterschiedliche Teilbereiche 44₁ bis 44ₙ der Endfläche 16a sind basierend auf der geneigten Richtung eingerichtet, um einen jeweils zugeordneten räumlichen Anteil 48 des optischen Signals 22 auf ein jeweils zugeordnetes Reflexionselement 46 umzulenken, welche dann die Umlenkung des entsprechenden Teils in Richtung des zugeordneten Durchlassbereichs 18₂ vornimmt. Mit zunehmendem Abstand zu der Endfläche 16a können die Reflexionselemente 46 beispielsweise zunehmend größer, kleiner oder anders geneigt sein und somit an die Lichtausbreitung in der gekrümmten Lichtleiterstruktur 90 angepasst sein. Das bedeutet, eine Abmessung der Reflexionselemente 46 kann entlang der Richtung 14 und/oder 26 und/oder im Hinblick auf eine Neigungsrichtung voneinander verschieden sein. Jedem Reflexionselement 46 kann ein Höhenbereich der gekrümmten Lichtleiterstruktur zwischen den Hauptseiten 12a und 12b eindeutig zugeordnet sein, etwa über die Teilbereiche 44. Dieser Höhenbereich kann über die gekrümmte Lichtleiterstruktur hinweg variabel sein.

In anderen Worten sind in einem weiteren Ausführungsbeispiel die Oberflächen 16a und 38 des Ringelements so geformt, dass die gebrochenen und reflektierten Strahlen 48 auf die Reflexionselemente 46 gerichtet werden, und zwar auf die Weise, dass die Leistungsdichte auf allen Reflexionselementen 46 identisch ist. Gleichzeitig finden sich alle Reflexionselemente immer auf derselben Höhe, da beispielsweise auf die Ausdünnung gemäß der Fig. 2a verzichtet werden kann. Die Flächenelemente der Hauptseite 12a können durch die Reflexionselemente 46 unterbrochen sein. Der Schatten, welcher von dem Strahl 48 und den Reflexionselementen geworfen wird, kann die Flächenelemente der Hauptseite 12a zu einem großen Teil oder komplett überdecken, beispielsweise zumindest 80%, zumindest 90% oder bis zu 100%, das bedeutet, es kann eine Reflexion an der Hauptseite 12a vermieden werden und das gesamte optische Signal ausgekoppelt werden. Die Flächenelemente können diejenigen Bereiche der Hauptseite 12a sein, die nicht von optischen Elementen bedeckt sind.

Ein weiteres Ausführungsbeispiel bezieht sich darauf, dass die Reflexionselemente nicht über die gesamte Breite des Rings ausgedehnt sind. Auf diese Weise kann die Ringstruktur feiner abgestuft werden bzw. die maximale Ringgröße erhöht werden. Es können somit die gleiche Höhenlage und/oder der gleiche Teilbereich auf der Endfläche 16a von mehreren Reflexionselementen genutzt werden, so dass zwar jedem Reflexionselement ein Teilbereich auf der Endfläche 16a zugeordnet sein kann, der entsprechende Teilbereich aber entlang der Höhenrichtung 26 gegebenenfalls aber nicht der seitlichen Richtung entlang der Ringbreite von mehreren Reflexionselementen genutzt wird. Die gekrümmte Lichtleiterstruktur 90 kann als nicht-stufig aufgebaute Ringstruktur bezeichnet werden.

Die vorliegenden Ausführungsbeispiele beschäftigen sich mit dem Problem, Datenübertragung über zwei zueinander rotierende Bauteile zu ermöglichen. Dies ist mit Kabeln nicht oder nur sehr eingeschränkt möglich. Zusätzlich muss die Rotationsachse einsatzbedingt freibleiben. Dies ist z. B. bei Computertomographen oder Motoren notwendig. Die Struktur der vorgestellten Lösungsidee unterscheidet sich deutlich vom Stand der Technik. Anders als DE 10 2007 041 927 A1 basiert die Idee auf Strahlenoptik. Im Gegensatz zu DE 28 46 526 A1 jedoch sind Datenraten im Bereich von > 10⁹ bit/s antizipiert. Dies wird erfindungsgemäß dadurch ermöglicht, dass eine geordnete Strahlführung in der Lichtleiterstruktur eingerichtet wird, um Mehrwegeausbreitung effektiv zu vermeiden.

Die in der vorliegenden Beschreibung und in den Patentansprüchen verwendeten Begriffe der ersten Hauptseite und/oder der zweiten Hauptseite können untereinander vertauscht werden, beispielsweise vor dem Hintergrund, welche der Hauptseiten das Licht, das heißt, das optische Signal empfängt, etwa die erste Hauptseite, und welche das Ausgabesignal bereitstellt, beispielsweise die zweite Hauptseite. Bei einer Kombination kann die erste Hauptseite möglicherweise diejenige sein, die die Reflexionselemente aufweist.

Die hierin beschriebenen Ringstrukturen und Ausgestaltungen sind im Hinblick auf Sendeeinrichtung und Empfangseinrichtung und bezüglich der Richtung, entlang derer das optische Signal durch die gekrümmte Lichtleiterstruktur geschickt wird, beliebig miteinander kombinierbar. Gemeinsam ist den Ausführungsbeispielen, dass in einem optischen Übertragungssystem im Umfang des gewünschten Kommunikationsflusses stets oder höchstens mit der zulässigen Unterbrechung, ein entsprechender Einlassbereich oder Auslassbereich im Sendebereich oder Empfangsbereich des beweglichen Teils der Kommunikationseinrichtung angeordnet ist. Dies kann durch ein oder mehrere gekrümmte Lichtleiterstrukturen erfolgen.

Manche Ausführungsbeispiele sehen vor, dass die gekrümmte Lichtleiterstruktur ortsfest bezüglich eines aus dem optischen Empfänger und/oder dem optischen Sender angeordnet ist, während der andere Teil beweglich sein kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Gekrümmte Lichtleiterstruktur (10; 20; 30; 50; 60; 70; 80; 90), die zum Leiten eines optischen Signals (22) in einem Spektralbereich eingerichtet ist, und die Folgendes aufweist:
an zwei Enden der gekrümmten Lichtleiterstruktur angeordnete Endflächen (16a, 16b);
eine zwischen den Endflächen (16a, 16b) verlaufende erste Hauptseite (12a, 12b) und eine gegenüberliegend zu der ersten Hauptseite (12a, 12b) und sich zwischen den Endflächen (16a, 16b) erstreckende zweite Hauptseite (12b, 12a);
zumindest einen ersten Durchlassbereich (18₁, 18₂) an der ersten Hauptseite (12a, 12b), wobei der erste Durchlassbereich (18₁, 18₂) ausgebildet ist, um ein optisches Signal (22) in dem Spektralbereich zu empfangen und durchzulassen, wobei die gekrümmte Lichtleiterstruktur (10; 20; 30; 50; 60; 70; 80; 90) ausgebildet ist, um das optische Signal (22) entlang einer axialen Richtung (14) zwischen den Endflächen (16a, 16b) zu leiten; und
zumindest einen zweiten Durchlassbereich (18₂, 18₁) an der zweiten Hauptseite (12b, 12a), der ausgebildet ist, um zumindest einen Teil des optischen Signals (22) aus der gekrümmten Lichtleiterstruktur durchzulassen, zu formen und auszusenden;
wobei der erste Durchlassbereich (18₁, 18₂) ausgebildet ist, um das auszusendende optische Signal (22) auf eine erste Endfläche (16a) der Endflächen zu richten, wobei dem zweiten Durchlassbereich (18₂, 18₁) ein Teilbereich (44) der Endfläche (16a) zugeordnet ist; und der Teil des optischen Signals (22) auf einem Anteil (48) des optischen Signals (22) basiert, der an dem Teilbereich (44) umgelenkt wird;
**dadurch gekennzeichnet, dass** der erste Durchlassbereich (18₁) ausgebildet ist, um das empfangene optische Signal (22) auf die erste Endfläche (16a) der Endflächen zu richten und dabei eine Fokussierung des optischen Signals (22) auszuführen, so dass das von der ersten Endfläche (16a) umgelenkte optische Signal (22) kollimiert ist.

2. Gekrümmte Lichtleiterstruktur (10; 20; 30; 50; 60; 70; 80; 90), die zum Leiten eines optischen Signals (22) in einem Spektralbereich eingerichtet ist, und die Folgendes aufweist:
an zwei Enden der gekrümmten Lichtleiterstruktur angeordnete Endflächen (16a, 16b);
eine zwischen den Endflächen (16a, 16b) verlaufende erste Hauptseite (12a, 12b) und eine gegenüberliegend zu der ersten Hauptseite (12a, 12b) und sich zwischen den Endflächen (16a, 16b) erstreckende zweite Hauptseite (12b, 12a);
zumindest einen ersten Durchlassbereich (18₁, 18₂) an der ersten Hauptseite (12a, 12b), wobei der erste Durchlassbereich (18₁, 18₂) ausgebildet ist, um ein optisches Signal (22) in dem Spektralbereich zu empfangen und durchzulassen, wobei die gekrümmte Lichtleiterstruktur (10; 20; 30; 50; 60; 70; 80; 90) ausgebildet ist, um das optische Signal (22) entlang einer axialen Richtung (14) zwischen den Endflächen (16a, 16b) zu leiten; und
zumindest einen zweiten Durchlassbereich (18₂, 18₁) an der zweiten Hauptseite (12b, 12a), der ausgebildet ist, um zumindest einen Teil des optischen Signals (22) aus der gekrümmten Lichtleiterstruktur durchzulassen, zu formen und auszusenden;
**dadurch gekennzeichnet, dass**
der erste Durchlassbereich (18₁, 18₂) ausgebildet ist, um das empfangene optische Signal (22) auf ein Reflexionselement (46) zu lenken, das eingerichtet ist, um das optische Signal (22) auf einen dem Reflexionselement (46) zugeordneten Teilbereich einer ersten Endfläche (16a) der Endflächen zu reflektieren; und der zweite Durchlassbereich (18₂, 18₁) eingerichtet ist, um das von der Endfläche (16a) reflektierte optische Signal (22) auszugeben; wobei der erste Durchlassbereich (18₁) ausgebildet ist, um das empfangene optische Signal (22) auf das Reflexionselement (46) zu lenken; wobei die Anordnung aus erstem Durchlassbereich (18₁) und Reflexionselement (46) eingerichtet ist, um das optische Signal (22) kollimiert zu der ersten Endfläche (16a) zu senden.

3. Gekrümmte Lichtleiterstruktur gemäß Anspruch 1 oder 2, die ausgebildet ist, um das optische Signal (22) an einer der Endflächen (16a) zwischen der axialen Richtung (14) und einer schräg hierzu angeordneten Richtung umzulenken; wobei die gekrümmte Lichtleiterstruktur eine Mehrzahl von zweiten Durchlassbereichen (18₂) in der zweiten Hauptseite (12b) umfasst, wobei jedem der zweiten Durchlassbereiche (18₂) ein Teilbereich (44) der Endfläche (16a) zugeordnet ist.

4. Gekrümmte Lichtleiterstruktur gemäß Anspruch 3, ferner mit einer Mehrzahl von Reflexionselementen (46), die an der ersten Hauptseite (12a) in der gekrümmten Lichtleiterstruktur angeordnet sind und die ausgebildet sind, um einen Anteil (48) des optischen Signals (22), der von dem zugeordneten Teilbereich (44) der Endfläche (16a) reflektiert wird, auf den zugeordneten zweiten Durchlassbereich (18₂) zu reflektieren.

5. Gekrümmte Lichtleiterstruktur gemäß Anspruch 4, bei der die Endfläche (16a) eingerichtet ist, um das optische Signal (22) in eine Richtung parallel zu einem Verlauf der zweiten Hauptseite (12b) umzulenken, wobei sich in Bereichen der Reflexionselemente (46) bezogen auf einen Abstand zwischen der ersten Hauptseite (12a) und der zweiten Hauptseite (12b) verjüngt und die Reflexionselemente (46) Kanten einer jeweiligen Materialverjüngung umfassen; oder
bei der die Endfläche (16a) eingerichtet ist, um das optische Signal (22) in eine geneigte Richtung, die geneigt zu einem Verlauf der zweiten Hauptseite (12b) ist, und in eine Richtung hin zu der ersten Hauptseite (12a) umzulenken, wobei die Mehrzahl von Reflexionselementen (46) mit zunehmendem Abstand von der Endfläche (16a) angeordnet sind und die unterschiedlichen Teilbereiche (44) der Endfläche (16a) basierend auf der geneigten Richtung einen jeweils zugeordneten räumlichen Anteil (48) des optischen Signals (22) auf ein jeweils zugeordnetes Reflexionselement (46) umzulenken.

6. Gekrümmte Lichtleiterstruktur gemäß einem der Ansprüche 3 bis 5, bei der jeder der zweiten Durchlassbereiche (18₂) ausgebildet ist, um an einen räumlichen Bereich (52) außerhalb der gekrümmten Lichtleiterstruktur den jeweiligen Teil (48) des optischen Signals (22) bereitzustellen;
wobei sich die räumlichen Bereiche (52) in einem Abstand an einen Kommunikationsempfänger (32) angepassten Abstand (54) überlappen;
wobei jeder der zweiten Durchlassbereiche (18₂) ausgebildet ist, um an einen räumlichen Bereich (52) außerhalb der gekrümmten Lichtleiterstruktur den jeweiligen Teil (48) des optischen Signals (22) kollimiert bereitzustellen.

7. Gekrümmte Lichtleiterstruktur gemäß einem der vorangehenden Ansprüche, die ausgebildet ist, um das optische Signal (22) über ein Reflexionselement (46) hin zu einer der Endflächen (16a) zwischen der axialen Richtung (14) und einer schräg hierzu angeordneten Richtung umzulenken; wobei die gekrümmte Lichtleiterstruktur eine Mehrzahl von ersten Durchlassbereichen (18₂) in der ersten Hauptseite (12b) umfasst, wobei jedem ersten Durchlassbereich (18₂) ein Teilbereich (44) der Endfläche (16a) zugeordnet ist.

8. Gekrümmte Lichtleiterstruktur gemäß einem der vorangehenden Ansprüche, die ausgebildet ist, um das von dem ersten Durchlassbereich (18₁) empfangene optische Signal (22) räumlich verteilt zwischen der ersten Hauptseite (12a) und zweite Hauptseite (12b) und entlang der axialen Richtung (14) und im Wesentlichen parallel zu der zweiten Hauptseite (12b) umzulenken, wobei die gekrümmte Lichtleiterstruktur eine Mehrzahl von entlang einer Dickenrichtung (26) verteilten Reflexionselemente (46) aufweist, die ausgebildet sind, um jeweils einen räumlichen Anteil (48) des optischen Signals (22) auszukoppeln.

9. Gekrümmte Lichtleiterstruktur (70; 80) gemäß einem der vorangehenden Ansprüche, die ein erstes Segment (70a; 80a) einer Gesamtstruktur bereitstellt und die ein zweites gleich großes oder unterschiedlich großes Segment (70b; 80b) aufweist, wobei die Endflächen (16a) der beiden Segmente benachbart in einem Mittenbereich angeordnet sind, wobei der erste Durchlassbereich (18₁) oder der zweite Durchlassbereich (18₂) in dem Mittenbereich angeordnet ist.

10. Optisches Übertragungssystem (25; 35; 45; 55; 65; 75; 85; 95) mit:
einem optischen Sender (28) zum Senden eines optischen Signals (22);
einer zum Empfangen des optischen Signals (22) an dem ersten Durchlassbereich eingerichteten gekrümmten Lichtleiterstruktur gemäß einem der vorangehenden Ansprüche; und
einem optischen Empfänger (32) zum Empfangen zumindest eines Teils des optischen Signals (22) an dem zweiten Durchlassbereich der gekrümmten Lichtleiterstruktur.

11. Optisches Übertragungssystem gemäß Anspruch 10, bei dem eine Vielzahl von zweiten Durchlassbereichen (18₂) an der zweiten Hauptseite (12b) angeordnet sind, die ausgebildet sind, um jeweils einen Anteil des optischen Signals (22) auszugeben, wobei an einem Ort des optischen Empfängers (32) jeder zweite Durchlassbereich (18₂) den Teil des optischen Signals (22) in einen räumlichen Bereich (52) außerhalb der gekrümmten Lichtleiterstruktur bereitzustellen; wobei sich die räumlichen Bereiche (52) am Ort des optischen Empfängers (32) überlappen, so dass bei einer Relativbewegung des optischen Empfängers (32) gegenüber den zweiten Durchlassbereichen (18₂) jeweils zumindest ein zweiter Durchlassbereich (18₂) mit dem optischen Empfänger (32) zur optischen Kommunikation positioniert ist; und/oder
bei dem eine Vielzahl von ersten Durchlassbereichen (18₂) an der ersten Hauptseite (12b) angeordnet sind, die jeweils ausgebildet sind, um das optische Signal (22) zu empfangen, wobei der optische Sender (28) so eingerichtet ist, dass an einem Ort der gekrümmten Lichtleiterstruktur das optische Signal (22) in einen räumlichen Bereich (62) auf die gekrümmte Lichtleiterstruktur trifft, wobei der räumliche Bereich (62) entlang der Erstreckung der gekrümmten Lichtleiterstruktur größer ist als ein jeweiliger erster Durchlassbereich (18); wobei die ersten Durchlassbereiche (18₂) mit einem dazwischenliegenden Abstand (51) zueinander angeordnet sind, der so gewählt ist, dass bei einer Relativbewegung des optischen Senders (28) gegenüber den ersten Durchlassbereichen (18₂) jeweils zumindest ein erster Durchlassbereich (18₂) mit dem optischen Sender (28) zur optischen Kommunikation positioniert ist.

12. Optisches Übertragungssystem gemäß Anspruch 10 oder 11, bei dem der optische Empfänger (32) ein erster optischer Empfänger (32₁) ist, bei dem der optische Sender (28) ortsfest mit der gekrümmten Lichtleiterstruktur verbunden ist, bei dem die gekrümmte Lichtleiterstruktur einen Teilbereich einer umlaufenden Bahn beschreibt und das optische Übertragungssystem zumindest einen zweiten optischen Empfänger (32₂) aufweist, so dass zu jeder Relativposition zumindest ein optischer Empfänger (32₁, 32₂) bezüglich der gekrümmten Lichtleiterstruktur so angeordnet ist, um einen Teil des optischen Signals (22) zu empfangen; oder
bei dem der optische Sender (28) ein erster optischer Sender (28₁) ist, bei dem der optische Empfänger (32) ortsfest mit dem gekrümmten Lichtleiterstruktur verbunden ist, bei dem die gekrümmte Lichtleiterstruktur einen Teilbereich einer umlaufenden Bahn beschreibt und das optische Übertragungssystem zumindest einen zweiten optischen Sender (28₂) aufweist, so dass zu jeder Relativposition zumindest ein optischer Sender (28₁, 28₂) bezüglich der gekrümmten Lichtleiterstruktur so angeordnet ist, um das optische Signal (22) an die gekrümmte Lichtleiterstruktur zu senden.

13. Optisches Übertragungssystem gemäß einem der Ansprüche 10 bis 12, bei dem an der zweiten Hauptseite (12b) eine Mehrzahl von Durchlassbereichen (18₂) angeordnet sind und an der ersten Hauptseite (12a) zumindest ein Durchlassbereich (18₁) angeordnet ist;
wobei der optische Sender (28) ein erster optischer Sender (28₁) ist, wobei der optische Empfänger (32) ein erster optischer Empfänger (32₁) ist; wobei das optische Übertragungssystem zumindest einen zweiten optischen Sender (28₂) und zumindest einen zweiten optischen Empfänger (32₁) aufweist, wobei ein Strahlteiler (64) benachbart zu dem Durchlassbereich (18₁) an der ersten Hauptseite (12a) angeordnet ist, und ausgebildet ist, um ein aus dem Durchlassbereich (18₁) der ersten Hauptseite (12a) empfangenes optische Signal (22) an den benachbart zu dem Strahlteiler (64) angeordneten ersten optischen Empfänger (32₂) zu leiten und um ein von dem ersten optischen Sender (28₁) empfangenes optisches Signal (22₁) an den Durchlassbereich (18₁) der ersten Hauptseite (12a) zu leiten, wobei benachbart zu der zweiten Hauptseite (12b) der zweite optische Sender (28₂) benachbart zu einem Durchlassbereich (18₂) und der zweite optische Empfänger (32₁) benachbart zu einem hiervon verschiedenen Durchlassbereich angeordnet ist.

14. Verfahren zum Herstellen einer gekrümmten Lichtleiterstruktur mit folgenden Schritten:
Bereitstellen einer gekrümmten Lichtleiterstruktur mit an zwei Enden der gekrümmten Lichtleiterstruktur angeordneten Endflächen, einer zwischen den Endflächen verlaufenden erste Hauptseite und einer gegenüberliegend zu der ersten Hauptseite und sich zwischen den Endflächen erstreckenden zweite Hauptseite, die zum Leiten eines optischen Signals in einem Spektralbereich eingerichtet ist;
Anordnen zumindest eines ersten Durchlassbereichs (121, 125) an der ersten Hauptseite (124, 126), so dass der erste Durchlassbereich (121, 125) ausgebildet ist, um ein optisches Signal (110; 210) in dem Spektralbereich zu empfangen und durchzulassen, so dass die gekrümmte Lichtleiterstruktur ausgebildet ist, um das optische Signal entlang einer axialen Richtung zwischen den Endflächen zu leiten; und
Anordnen zumindest eines zweiten Durchlassbereichs (125, 121) an der zweiten Hauptseite (126, 124), der ausgebildet ist, um zumindest einen Teil des optischen Signals (110; 210) aus der gekrümmten Lichtleiterstruktur durchzulassen, zu formen und auszusenden;
so dass der erste Durchlassbereich (18₁, 18₂) ausgebildet ist, um das auszusendende optische Signal (22) auf eine erste Endfläche (16a) der Endflächen zu richten, wobei dem zweiten Durchlassbereich (18₂, 18₁) ein Teilbereich (44) der Endfläche (16a) zugeordnet ist; und der Teil des optischen Signals (22) auf einem Anteil (48) des optischen Signals (22) basiert, der an dem Teilbereich (44) umgelenkt wird; so dass der erste Durchlassbereich (18₁) ausgebildet ist, um das empfangene optische Signal (22) auf die erste Endfläche (16a) der Endflächen zu richten und dabei eine Fokussierung des optischen Signals (22) auszuführen, so dass das von der ersten Endfläche (16a) umgelenkte optische Signal (22) kollimiert ist-

15. Verfahren zum Herstellen einer gekrümmten Lichtleiterstruktur mit folgenden Schritten:
Bereitstellen einer gekrümmten Lichtleiterstruktur mit an zwei Enden der gekrümmten Lichtleiterstruktur angeordneten Endflächen, einer zwischen den Endflächen verlaufenden erste Hauptseite und einer gegenüberliegend zu der ersten Hauptseite und sich zwischen den Endflächen erstreckenden zweite Hauptseite, die zum Leiten eines optischen Signals in einem Spektralbereich eingerichtet ist;
Anordnen zumindest eines ersten Durchlassbereichs (121, 125) an der ersten Hauptseite (124, 126), so dass der erste Durchlassbereich (121, 125) ausgebildet ist, um ein optisches Signal (110; 210) in dem Spektralbereich zu empfangen und durchzulassen, so dass die gekrümmte Lichtleiterstruktur ausgebildet ist, um das optische Signal entlang einer axialen Richtung zwischen den Endflächen zu leiten; und
Anordnen zumindest eines zweiten Durchlassbereichs (125, 121) an der zweiten Hauptseite (126, 124), der ausgebildet ist, um zumindest einen Teil des optischen Signals (110; 210) aus der gekrümmten Lichtleiterstruktur durchzulassen, zu formen und auszusenden;
so dass der erste Durchlassbereich (18₁, 18₂) ausgebildet ist, um das empfangene optische Signal (22) auf ein Reflexionselement (46) zu lenken, das eingerichtet ist, um das optische Signal (22) auf einen dem Reflexionselement (46) zugeordneten Teilbereich einer ersten Endfläche (16a) der Endflächen zu reflektieren; und der zweite Durchlassbereich (18₂, 18₁) eingerichtet ist, um das von der Endfläche (16a) reflektierte optische Signal (22) auszugeben; so dass der erste Durchlassbereich (18₁) ausgebildet ist, um das empfangene optische Signal (22) auf das Reflexionselement (46) zu lenken; so dass die Anordnung aus erstem Durchlassbereich (18₁) und Reflexionselement (46) eingerichtet ist, um das optische Signal (22) kollimiert zu der ersten Endfläche (16a) zu senden.

## Claims

1. A curved light guide structure (10; 20; 30; 50; 60; 70; 80; 90) configured to guide an optical signal (22) within a spectral region, and comprising:
end faces (16a, 16b) disposed at two ends of the curved light guide structure;
a first main side (12a, 12b) extending between the end faces (16a, 16b), and a second main side (12b, 12a) opposite the first main side (12a, 12b) and extending between the end faces (16a, 16b);
at least a first pass region (18₁, 18₂) on the first main side (12a, 12b), the first pass region (18₁, 18₂) being configured to receive and transmit an optical signal (22) within the spectral region, wherein the curved light guide structure (10; 20; 30; 50; 60; 70; 80; 90) is configured to guide the optical signal (22) along an axial direction (14) between the end faces (16a, 16b); and
at least a second pass region (18₂, 18₁) on the second main side (12b, 12a) that is configured to let pass, to form and emit at least part of the optical signal (22) from the curved light guide structure;
wherein the first pass region (18₁, 18₂) is configured to direct the optical signal (22) to be emitted onto a first end face (16a) of the end faces, wherein the second pass region (18₂, 18₁) being associated with a sub-region (44) of the end face (16a); and the part of the optical signal (22) is based on a part (48) of the optical signal (22) that is redirected at the sub-region (44); **characterized in that** the first pass region (18₁) is configured to direct the received optical signal (22) to the first end face (16a) of the end faces, thereby performing focusing of the optical signal (22) so that the optical signal (22) redirected from the first end face (16a) is collimated.

2. A curved light guide structure (10; 20; 30; 50; 60; 70; 80; 90) configured to guide an optical signal (22) within a spectral region, and comprising:
end faces (16a, 16b) disposed at two ends of the curved light guide structure;
a first main side (12a, 12b) extending between the end faces (16a, 16b), and a second main side (12b, 12a) opposite the first main side (12a, 12b) and extending between the end faces (16a, 16b);
at least a first pass region (18₁, 18₂) on the first main side (12a, 12b), the first pass region (18₁, 18₂) being configured to receive and transmit an optical signal (22) within the spectral region, wherein the curved light guide structure (10; 20; 30; 50; 60; 70; 80; 90) is configured to guide the optical signal (22) along an axial direction (14) between the end faces (16a, 16b); and
at least a second pass region (18₂, 18₁) on the second main side (12b, 12a) that is configured to let pass, to form and emit at least part of the optical signal (22) from the curved light guide structure;
**characterized in that** the first pass region (18₁, 18₂) is configured to direct the received optical signal (22) to a reflection element (46) configured to reflect the optical signal (22) onto a sub-region of a first end face (16a) of the end faces that is associated with the reflection element (46); and the second pass region (18₂, 18₁) is configured to output the optical signal (22) reflected by the end face (16a); wherein the first pass region (18₁) is configured to direct the received optical signal (22) to the reflection element (46); wherein the arrangement of the first pass region (18₁) and the reflection element (46) is arranged to transmit the optical signal (22) to the first end face (16a) in a collimated state.

3. The curved light guide structure as claimed in claims 1 or 2, configured to redirect the optical signal (22) at one of the end faces (16a) between the axial direction (14) and a direction oblique thereto; wherein the curved light guide structure comprises a plurality of second pass regions (18₂) in the second main side (12b), each of the second pass regions (18₂) being associated with a sub-region (44) of the end face (16a).

4. The curved light guide structure as claimed in claim 3, further comprising a plurality of reflection elements (46) arranged on the first main side (12a) in the curved light guide structure and configured to reflect a part (48) of the optical signal (22), that is reflected by the associated sub-region (44) of the end face (16a), onto the associated second pass region (18₂).

5. The curved light guide structure as claimed in claim 4, wherein the end face (16a) is configured to redirect the optical signal (22) in a direction parallel to a course of the second main side (12b), wherein in regions of the reflection elements (46) taper with respect to a distance between the first main side (12a) and the second main side (12b), and the reflection elements (46) comprise edges of a respective material taper: or
wherein the end face (16a) is configured to redirect the optical signal (22) in an inclined direction inclined to a course of the second main side (12b) and in a direction towards the first main side (12a), wherein the plurality of reflection elements (46) are arranged with increasing distance from the end face (16a), and the different subregions (44) of the end face (16a) are configured, on the basis of the inclined direction, to redirect a respectively associated spatial part (48) of the optical signal (22) onto a respectively associated reflection element (46).

6. The curved light guide structure as claimed in any of claims 3 to 5, wherein each of the second pass regions (18₂) is configured to provide the respective part (48) of the optical signal (22) to a spatial region (52) external to the curved light guide structure;
the spatial regions (52) overlapping at a distance (54) configured to a communications receiver (32);
wherein each of the second pass regions (18₂) is configured to provide the respective part (48) of the optical signal (22), in a collimated state, to a spatial region (52) outside the curved light guide structure.

7. The curved light guide structure as claimed in any of the previous claims, configured to redirect the optical signal (22) via a reflection element (46) towards one of the end faces (16a) between the axial direction (14) and a direction oblique thereto; wherein the curved light guide structure comprises a plurality of first pass regions (18₂) in the first main side (12b), each first pass region (18₂) being associated with a sub-region (44) of the end face (16a).

8. The curved light guide structure as claimed in any of the previous claims, configured to redirect the optical signal (22) received from the first pass region (18₁) in a manner that spatially distributed between the first main side (12a) and second main side (12b) and along the axial direction (14) and substantially parallel to the second main side (12b), wherein the curved light guide structure comprises a plurality of reflection elements (46) distributed along a thickness direction (26), each reflection element being configured to couple out a spatial part (48) of the optical signal (22).

9. The curved light guide structure (70; 80) as claimed in any of the previous claims, which provides a first segment (70a; 80a) of an overall structure and which has a second segment (70b; 80b) of equal or different size, the end faces (16a) of the two segments being arranged adjacent to each other in a center region, the first pass region (18₁) or the second pass region (18₂) being arranged in the center region.

10. An optical transmission system (25; 35; 45; 55; 65; 75; 85; 95) comprising:
an optical transmitter (28) for transmitting an optical signal (22);
a curved light guide structure as claimed in any of the previous claims, configured to receive the optical signal (22) at the first pass region; and
an optical receiver (32) for receiving at least part of the optical signal (22) at the second pass region of the curved light guide structure.

11. The optical transmission system as claimed in claim 10, wherein a plurality of second pass regions (18₂) are arranged on the second main side (12b) and are configured to each output a portion of the optical signal (22), wherein at a location of the optical receiver (32), every other pass region (18₂) provides the part of the optical signal (22) into a spatial region (52) outside the curved light guide structure; wherein the spatial regions (52) overlap at the location of the optical receiver (32) such that upon a relative movement of the optical receiver (32) with respect to the second pass regions (18₂), at least one second pass region (18₂) is positioned with the optical receiver (32) for optical communication; and/or
wherein a plurality of first pass regions (18₂) are arranged on the first main side (12b), each configured to receive the optical signal (22), the optical transmitter (28) being configured such that, at a location of the curved light guide structure, the optical signal (22) impinges on the curved light guide structure in a spatial region (62), the spatial region (62) being larger, along the extension of the curved light guide structure, than a respective first pass region (18); wherein the first pass regions (18₂) are spaced apart from each other with a distance (51) between them that is selected such that upon a relative movement of the optical transmitter (28) with respect to the first pass regions (18₂), at least one respective first pass region (18₂) is positioned with the optical transmitter (28) for optical communication.

12. The optical transmission system as claimed in claim 10 or 11, wherein the optical receiver (32) is a first optical receiver (32₁), wherein the optical transmitter (28) is fixedly connected to the curved light guide structure, in which the curved light guide structure describes a sub-region of a circumferential path, and the optical transmission system has at least one second optical receiver (32₂), so that at each relative position, at least one optical receiver (32₁, 32₂) is arranged, with respect to the curved optical waveguide structure, in such a way as to receive part of the optical signal (22); or
wherein the optical transmitter (28) is a first optical transmitter (28₁), wherein the optical receiver (32) is connected to the curved light guide structure in a stationary manner, in which the curved light guide structure describes a sub-region of a circumferential path, and the optical transmission system has at least one second optical transmitter (28₂), so that at each relative position, at least one optical transmitter (28₁, 28₂) is arranged, with respect to the curved light guide structure, in such a way as to transmit the optical signal (22) to the curved light guide structure.

13. The optical transmission system as claimed in any of claims 10 to 12, wherein a plurality of pass regions (18₂) are arranged on the second main side (12b), and at least one pass region (18₁) is arranged on the first main side (12a);
wherein the optical transmitter (28) is a first optical transmitter (28₁), wherein the optical receiver (32) is a first optical receiver (32₁); wherein the optical transmission system comprises at least a second optical transmitter (28₂) and at least a second optical receiver (32₁), wherein a beam splitter (64) is arranged adjacent to the pass region (18₁) on the first main side (12a) and is configured to direct an optical signal (22) received from the pass region (18₁) of the first main side (12a) to the first optical receiver (32₂) arranged adjacent to the beam splitter (64), and to direct an optical signal (22₁) received from the first optical transmitter (28₁) to the pass region (18₁) of the first main side (12a), wherein adjacent to the second main side (12b), the second optical transmitter (28₂) is arranged adjacent to a pass region (18₂) and the second optical receiver (32₁) is arranged adjacent to a pass region different therefrom.

14. A method of manufacturing a curved light guide structure, comprising the steps of:
providing a curved light guide structure having end faces disposed at two ends of the curved light guide structure, a first main side extending between the end faces, and a second main side opposite the first main side and extending between the end faces, the second main side being configured to guide an optical signal within a spectral region;
arranging at least a first pass region (121, 125) on the first main side (124, 126), so that the first pass region (121, 125) is configured to receive and let pass an optical signal (110; 210) within the spectral region, so that the curved light guide structure is configured to guide the optical signal along an axial direction between the end faces; and
arranging at least a second pass region (125, 121) on the second main side (126, 124) that is configured to let pass, to form and emit at least part of the optical signal (110; 210) from the curved light guide structure;
so that the first pass region (18₁, 18₂) is configured to direct the optical signal (22) to be emitted onto a first end face (16a) of the end faces, wherein the second pass region (18₂, 18₁) being associated with a sub-region (44) of the end face (16a); and the part of the optical signal (22) is based on a part (48) of the optical signal (22) that is redirected at the sub-region (44); so that the first pass region (18₁) is configured to direct the received optical signal (22) to the first end face (16a) of the end faces, thereby performing focusing of the optical signal (22) so that the optical signal (22) redirected from the first end face (16a) is collimated.

15. A method of manufacturing a curved light guide structure, comprising the steps of:
providing a curved light guide structure having end faces disposed at two ends of the curved light guide structure, a first main side extending between the end faces, and a second main side opposite the first main side and extending between the end faces, the second main side being configured to guide an optical signal within a spectral region;
arranging at least a first pass region (121, 125) on the first main side (124, 126), so that the first pass region (121, 125) is configured to receive and let pass an optical signal (110; 210) within the spectral region, so that the curved light guide structure is configured to guide the optical signal along an axial direction between the end faces; and
arranging at least a second pass region (125, 121) on the second main side (126, 124) that is configured to let pass, to form and emit at least part of the optical signal (110; 210) from the curved light guide structure;
so that the first pass region (18₁, 18₂) is configured to direct the received optical signal (22) to a reflection element (46) configured to reflect the optical signal (22) onto a sub-region of a first end face (16a) of the end faces that is associated with the reflection element (46); so that the second pass region (18₂, 18₁) is configured to output the optical signal (22) reflected by the end face (16a); wherein the first pass region (18₁) is configured to direct the received optical signal (22) to the reflection element (46); so that the arrangement of the first pass region (18₁) and the reflection element (46) is arranged to transmit the optical signal (22) to the first end face (16a) in a collimated state.

## Revendications

1. Structure de guidage de lumière courbée (10; 20; 30; 50; 60; 70; 80; 90) qui est aménagée pour guider un signal optique (22) dans une zone spectrale, et qui présente ce qui suit:
des faces d'extrémité (16a, 16b) disposées à deux extrémités de la structure de guidage de lumière courbée;
un premier côté principal (12a, 12b) s'étendant entre les faces d'extrémité (16a, 16b) et un deuxième côté principal (12b, 12a) situé opposé au premier côté principal (12a, 12b) et s'étendant entre les faces d'extrémité (16a, 16b);
au moins une première zone de passage (18₁, 18₂) sur le premier côté principal (12a, 12b), où la première zone de passage (18₁, 18₂) est conçue pour recevoir et laisser passer un signal optique (22) dans la zone spectrale, où la structure de guidage de lumière courbée (10; 20; 30; 50; 60; 70; 80; 90) est conçue pour guider le signal optique (22) dans une direction axiale (14) entre les faces d'extrémité (16a, 16b); et
au moins une deuxième zone de passage (18₂, 18₁) sur le deuxième côté principal (12b, 12a) qui est conçue pour laisser passer, former et émettre au moins une partie du signal optique (22) à partir de la structure de guidage de lumière courbée;
dans laquelle la première zone de passage (18₁, 18₂) est conçue pour orienter le signal optique (22) à émettre vers une première face d'extrémité (16a) parmi les faces d'extrémité, dans laquelle est associée à la deuxième zone de passage (18₂, 18₁) une zone partielle (44) de la face d'extrémité (16a); et la partie du signal optique (22) est basée sur une part (48) du signal optique (22) qui est détournée au niveau de la zone partielle (44);
**caractérisée par le fait que**
la première zone de passage (18₁) est conçue pour diriger le signal optique reçu (22) vers la première face d'extrémité (16a) parmi les faces d'extrémité et pour réaliser ainsi une focalisation du signal optique (22) de sorte que soit collimaté le signal optique (22) dévié depuis la première face d'extrémité (16a).

2. Structure de guidage de lumière courbée (10; 20; 30; 50; 60; 70; 80; 90) qui est aménagée pour guider un signal optique (22) dans une zone spectrale, et qui présente ce qui suit:
des faces d'extrémité (16a, 16b) disposées à deux extrémités de la structure de guidage de lumière courbée;
un premier côté principal (12a, 12b) s'étendant entre les faces d'extrémité (16a, 16b) et un deuxième côté principal (12b, 12a) opposé au premier côté principal (12a, 12b) et s'étendant entre les faces d'extrémité (16a, 16b);
au moins une première zone de passage (18₁, 18₂) sur le premier côté principal (12a, 12b), où la première zone de passage (18₁, 18₂) est conçue pour recevoir et laisser passer un signal optique (22) dans la zone spectrale, où la structure de guidage de lumière courbée (10; 20; 30; 50; 60; 70; 80; 90) est conçue pour guider le signal optique (22) dans une direction axiale (14) entre les faces d'extrémité (16a, 16b); et
au moins une deuxième zone de passage (18₂, 18₁) sur le deuxième côté principal (12b, 12a) qui est conçue pour laisser passer, former et émettre au moins une partie du signal optique (22) de la structure de guidage de lumière courbée;
**caractérisée par le fait que**
la première zone de passage (18₁, 18₂) est conçue pour diriger le signal optique (22) reçu vers un élément de réflexion (46) qui est aménagé pour réfléchir le signal optique (22) sur une zone partielle d'une première face d'extrémité (16a) parmi les faces d'extrémité associée à l'élément de réflexion (46); et la deuxième zone de passage (18₂, 18₁) est aménagée pour sortir le signal optique (22) réfléchi à partir de la face d'extrémité (16a); où la première zone de passage (18₁) est conçue pour diriger le signal optique (22) reçu vers l'élément de réflexion (46); où l'aménagement de la première zone de passage (18₁) et de l'élément de réflexion (46) est aménagé pour envoyer le signal optique (22) de manière collimatée vers la première face d'extrémité (16a).

3. Structure de guidage de lumière courbée selon la revendication 1 ou 2, qui est conçue pour dévier le signal optique (22) au niveau d'une des faces d'extrémité (16a) entre la direction axiale (14) et une direction disposée obliquement à cette dernière; où la structure de guidage de lumière courbée comporte une pluralité de deuxièmes zones de passage (18₂) dans le deuxième côté principal (12b), où à chacune des deuxièmes zones de passage (18₂) est associée une zone partielle (44) de la face d'extrémité (16a).

4. Structure de guidage de lumière courbée selon la revendication 3, avec par ailleurs une pluralité d'éléments de réflexion (46) qui sont disposés sur le premier côté principal (12a) dans la structure de guidage de lumière courbée et qui sont conçus pour réfléchir, sur la deuxième zone de passage (18₂) associée, une part (48) du signal optique (22) qui est réfléchie par la zone partielle (44) associée de la face d'extrémité (16a).

5. Structure de guidage de lumière courbée selon la revendication 4, dans laquelle la face d'extrémité (16a) est conçue pour dévier le signal optique (22) dans une direction parallèle à un parcours du deuxième côté principal (12b), dans laquelle les éléments de réflexion (46) sont effilés par régions sur base d'une distance entre le premier côté principal (12a) et le deuxième côté principal (12b) et les éléments de réflexion (46) comportent des bords d'un effilement de matériau respectif; ou
dans laquelle la face d'extrémité (16a) est aménagée pour dévier le signal optique (22) dans une direction inclinée qui est inclinée vers un parcours du deuxième côté principal (12b), et dans une direction vers le premier côté principal (12a), dans laquelle la pluralité d'éléments de réflexion (46) sont disposés à une distance croissante de la face d'extrémité (16a) et les différentes zones partielles (44) de la face d'extrémité (16a) pour dévier sur base de la direction inclinée une part spatiale (48) associée respective du signal optique (22) vers un élément de réflexion (46) associé respectif.

6. Structure de guidage de lumière courbée selon l'une des revendications 3 à 5, dans laquelle chacune des deuxièmes zones de passage (18₂) est conçue pour fournir, au niveau d'une zone spatiale (52) à l'extérieur de la structure de guidage de lumière courbée, la part respective (48) du signal optique (22);
dans laquelle les zones spatiales (52) viennent en chevauchement à distance à une distance (54) adaptée à un récepteur de communication (32);
dans laquelle chacune des deuxièmes zones de passage (18₂) est conçue pour fournir de manière collimatée à une zone spatiale (52) en-dehors de la structure de guidage de lumière courbée la partie respective (48) du signal optique (22).

7. Structure de guidage de lumière courbée selon l'une des revendications précédentes, qui est conçue pour dévier le signal optique (22) par l'intermédiaire d'un élément de réflexion (46) vers l'une des faces d'extrémité (16a) entre la direction axiale (14) et une direction disposée en oblique par rapport à cette dernière; dans laquelle la structure de guidage de lumière courbée comporte une pluralité de premières zones de passage (18₂) dans le premier côté principal (12b), où à chaque première zone de passage (18₂) est associée une zone partielle (44) de la face d'extrémité (16a).

8. Structure de guidage de lumière courbée selon l'une des revendications précédentes, qui est conçue pour dévier le signal optique (22) reçu de la première zone de passage (18₁) de manière répartie de manière spatiale entre le premier côté principal (12a) et le deuxième côté principal (12b) et dans la direction axiale (14) et de manière sensiblement parallèle au deuxième côté principal (12b), dans laquelle la structure de guidage de lumière courbée présente une pluralité d'éléments de réflexion (46) répartis dans une direction de l'épaisseur (26) qui sont conçus pour découpler respectivement une part spatiale (48) du signal optique (22).

9. Structure de guidage de lumière courbée (70; 80) selon l'une des revendications précédentes qui fournit un premier segment (70a; 80a) d'une structure d'ensemble et qui présente un deuxième segment (70b; 80b) de même grandeur ou de grandeur différente, dans laquelle les faces d'extrémité (16a) des deux segments sont disposés de manière adjacente dans une zone centrale, dans laquelle la première zone de passage (18₁) ou la deuxième zone de passage (18₂) est disposée dans la zone centrale.

10. Système de transmission optique (25; 35; 45; 55; 65; 75; 85; 95) avec:
un émetteur optique (28) destiné à envoyer un signal optique (22);
une structure de guidage de lumière courbée selon l'une des revendications précédentes aménagée pour recevoir le signal optique (22) au niveau de la première zone de passage; et
un récepteur optique (32) destiné à recevoir au moins une partie du signal optique (22) au niveau de la deuxième zone de passage de la structure de guidage de lumière courbée.

11. Système de transmission optique selon la revendication 10, dans lequel une pluralité de deuxièmes zones de passage (18₂) sont disposées sur le deuxième côté principal (12b), lesquelles sont conçues pour émettre, chacune, une part du signal optique (22), dans lequel chaque deuxième zone de passage (18₂) fournit à un emplacement du récepteur optique (32) la partie du signal optique (22) dans une zone spatiale (52) en-dehors de la structure de guidage de lumière courbée; dans lequel les zones spatiales (52) viennent en chevauchement à l'emplacement du récepteur optique (32), de sorte que, lors d'un déplacement relatif du récepteur optique (32) par rapport aux deuxièmes zones de passage (18₂), au moins une deuxième zone de passage (18₂) est chaque fois positionnée pour la communication optique avec le récepteur optique (32); et/ou
dans lequel une pluralité de premières zones de passage (18₂) sont disposées sur le premier côté principal (12b), lesquelles sont conçues, chacune, pour recevoir le signal optique (22), dans lequel l'émetteur optique (28) est aménagé de sorte qu'à un endroit de la structure de guidage de lumière courbée le signal optique (22) atteigne la structure de guidage de lumière courbée dans une zone spatiale (62), dans lequel la zone spatiale (62) est, le long du parcours de la structure de guidage de lumière courbée, plus grande qu'une première zone de passage (18) respective; dans lequel les premières zones de passage (18₂) sont disposées avec une distance intermédiaire (51) l'une par rapport à l'autre qui est sélectionnée de sorte que, lors d'un déplacement relatif de l'émetteur optique (28) par rapport aux premières zones de passage (18₂), au moins une première zone de passage (18₂) soit chaque fois positionnée pour une communication optique avec l'émetteur optique (28).

12. Système de transmission optique selon la revendication 10 ou 11, dans lequel le récepteur optique (32) est un premier récepteur optique (32₁), dans lequel l'émetteur optique (28) est connecté de manière stationnaire à la structure de guidage de lumière courbée, dans lequel la structure de guidage de lumière courbée décrit une zone partielle d'une trajectoire périphérique et le système de transmission optique présente au moins un deuxième récepteur optique (32₂), de sorte qu'à chaque position relative soit disposé au moins un récepteur optique (32₁, 32₂) par rapport à la structure de guidage de lumière courbée pour recevoir une partie du signal optique (22); ou
dans lequel l'émetteur optique (28) est un premier émetteur optique (28i), dans lequel le récepteur optique (32) est connecté de manière stationnaire à la structure de guidage de lumière courbée, dans lequel la structure de guidage de lumière courbée décrit une zone partielle d'une trajectoire périphérique et le système de transmission optique présente au moins un deuxième émetteur optique (28₂), de sorte qu'à chaque position relative soit disposé au moins un émetteur optique (28₁, 28₂) par rapport à la structure de guidage de lumière courbée pour envoyer le signal optique (22) à la structure de guidage de lumière courbée.

13. Système de transmission optique selon l'une des revendications 10 à 12, dans lequel sont disposées sur le deuxième côté principal (12b) une pluralité de zones de passage (18₂) et sur le premier côté principal (12a) est disposée au moins une zone de passage (18₁);
dans lequel l'émetteur optique (28) est un premier émetteur optique (28₁), dans lequel le récepteur optique (32) est un premier récepteur optique (32₁); dans lequel le système de transmission optique présente au moins un deuxième émetteur optique (28₂) et au moins un deuxième récepteur optique (32i), dans lequel un diviseur de faisceau (64) est disposé adjacent à la zone de passage (18₁) sur le premier côté principal (12a), et est conçu pour diriger un signal optique (22) reçu de la zone de passage (18₁) du premier côté principal (12a) vers le premier émetteur optique (32₂) disposé adjacent au diviseur de faisceau (64) et pour diriger un signal optique (22₁) reçu du premier émetteur optique (28₁) vers la zone de passage (18₁) du premier côté principal (12a), dans lequel, adjacent au deuxième côté principal (12b), le deuxième émetteur optique (28₂) est disposé adjacent à une zone de passage (18₂) et le deuxième récepteur optique (32₁) est disposé adjacent à une zone de passage différente de cette dernière.

14. Procédé de fabrication d'une structure de guidage de lumière courbée, aux étapes suivantes consistant à:
prévoir une structure de guidage de lumière courbée avec des faces d'extrémité disposées à deux extrémités de la structure de guidage de lumière courbée, un premier côté principal s'étendant entre les faces d'extrémité et un deuxième côté principal opposé au premier côté principal et s'étendant entre les faces d'extrémité, qui est aménagé pour guider un signal optique dans une zone spectrale;
disposer au moins une première zone de passage (121, 125) sur le premier côté principal (124, 126), de sorte que la première zone de passage (121, 125) soit conçue pour recevoir et laisser passer un signal optique (110; 210) dans la zone spectrale, de sorte que la structure de guidage de lumière courbée soit conçue pour guider le signal optique dans une direction axiale entre les faces d'extrémité; et
disposer au moins une deuxième zone de passage (125, 121) sur le deuxième côté principal (126, 124), qui est conçue pour laisser passer, former et émettre au moins une partie du signal optique (110; 210) à partir de la structure de guidage de lumière courbée;
de sorte que la première zone de passage (18₁, 18₂) soit conçue pour diriger le signal optique (22) à émettre vers une première face d'extrémité (16a) parmi les faces d'extrémité, où à la deuxième zone de passage (18₂, 18₁) est associée une zone partielle (44) de la face d'extrémité (16a); et la partie du signal optique (22) est basée sur une part (48) du signal optique (22) qui est déviée au niveau de la zone partielle (44); de sorte que la première zone de passage (18₁) soit conçue pour diriger le signal optique reçu (22) vers la première face d'extrémité (16a) parmi les faces d'extrémité et pour réaliser ainsi une focalisation du signal optique (22), de sorte que soit collimaté le signal optique (22) dévié depuis la première face d'extrémité (16a).

15. Procédé de fabrication d'une structure de guidage de lumière courbée, aux étapes suivantes consistant à:
prévoir une structure de guidage de lumière courbée avec des faces d'extrémité disposées à deux extrémités de la structure de guidage de lumière courbée, un premier côté principal s'étendant entre les faces d'extrémité et un deuxième côté principal opposé au premier côté principal et s'étendant entre les faces d'extrémité, qui est aménagé pour guider un signal optique dans une zone spectrale;
disposer au moins une première zone de passage (121, 125) sur le premier côté principal (124, 126), de sorte que la première zone de passage (121, 125) soit conçue pour recevoir et laisser passer un signal optique (110; 210) dans la zone spectrale, de sorte que la structure de guidage de lumière courbée soit conçue pour guider le signal optique dans une direction axiale entre les faces d'extrémité; et
disposer au moins une deuxième zone de passage (125, 121) sur le deuxième côté principal (126, 124), qui est conçue pour laisser passer, former et émettre au moins une partie du signal optique (110; 210) à partir de la structure de guidage de lumière courbée;
de sorte que la première zone de passage (18₁, 18₂) soit conçue pour diriger le signal optique (22) reçu vers un élément de réflexion (46) qui est aménagé pour réfléchir le signal optique (22) sur une zone partielle d'une première face d'extrémité (16a) parmi les faces d'extrémité associée à l'élément de réflexion (46); et que la deuxième zone de passage (18₂, 18₁) soit aménagée pour sortir le signal optique (22) réfléchi par la face d'extrémité (16a); de sorte que la première zone de passage (18₁) soit conçue pour diriger le signal optique (22) reçu vers l'élément de réflexion (46); de sorte que l'aménagement de la première zone de passage (18₁) et de l'élément de réflexion (46) soit aménagé pour envoyer le signal optique (22) de manière collimatée vers la première face d'extrémité (16a).
